# EUROPEAN PATENT APPLICATION

(11) **EP 4 832 565 A1**
(43) Date of publication of application: **28.10.2026**
(21) Application number: 24911585.8
(22) Date of filing: 28.12.2024
(51) Int. Cl.: H04W 28/06

(54) **COMMUNICATION METHOD AND COMMUNICATION APPARATUS**

(30) Priority: 29.12.2023 CN 202311863894
(71) Applicant: Huawei Technologies Co., Ltd., Shenzhen, Guangdong 518129 (CN)
(72) Inventor: LI, Bingzhao, Shenzhen, Guangdong 518129 (CN); CHANG, Junren, Shenzhen, Guangdong 518129 (CN); LIU, Nannan, Shenzhen, Guangdong 518129 (CN); QIANG, Li, Shenzhen, Guangdong 518129 (CN)
(74) Representative: MERH-IP Matias Erny Reichl Hoffmann Patentanwälte PartG mbB
(86) International application number: PCT/CN2024/143507
(87) International publication number: WO 2025/140671

(57) **Abstract**

A communication method and a communication apparatus are disclosed. A perception layer is introduced into a communication protocol stack, to implement information exchange between different protocol layers. In addition, this solution is universal, and helps improve data transmission efficiency. The method may include: receiving a first uplink data packet, where the first uplink data packet may include a first perception layer header, the first perception layer header may carry first control information and/or a first transmission parameter, the first control information is used to request a second transmission parameter, the first transmission parameter may be understood as a parameter provided by a first application layer for a first data link layer, the second transmission parameter may be understood as a parameter provided by a second data link layer for the first application layer, and the first uplink data packet herein may be a data packet corresponding to a first service flow.

## Description

This application claims priority to Chinese Patent Application No. 202311863894.2, filed with the China National Intellectual Property Administration on December 29, 2023 and entitled "COMMUNICATION METHOD AND COMMUNICATION APPARATUS", which is incorporated herein by reference in its entirety.

### TECHNICAL FIELD

Embodiments of this application relate to the field of communication technologies, and in particular, to a communication method and a communication apparatus.

### BACKGROUND

In a communication system, a plurality of protocol layers are usually defined in a communication protocol. A data packet of a transmitter is sent to a receiver after being processed at each protocol layer, and the receiver can obtain the data packet through reverse processing at each protocol layer. Different protocol layers are designed independently and run independently, and logic of each protocol layer is completed independently in a modular division manner. In a process of processing transmitted data according to an existing communication protocol, effective interaction is lacking between protocol layers, affecting transmission efficiency. Therefore, how to implement effective interaction between the protocol layers in a data transmission process to improve transmission efficiency is an urgent technical problem to be resolved.

### SUMMARY

Embodiments of this application provide a communication method and a communication apparatus, to implement efficient interaction between different protocol layers, thereby helping increase a data transmission rate.

According to a first aspect, an embodiment of this application provides a communication method. The method may include: receiving a first uplink data packet, where the first uplink data packet includes a first perception layer header, the first perception layer header carries first control information and/or a first transmission parameter, the first control information is used to request a second transmission parameter, the first transmission parameter is a parameter provided by a first application layer for a first data link layer, the second transmission parameter is a parameter provided by a second data link layer for the first application layer, and the first uplink data packet is a data packet corresponding to a first service flow.

The first transmission parameter may be understood as a parameter provided by an application layer of a terminal device for a data link layer of the terminal device and/or a data link layer of an access network device. The second transmission parameter may be understood as a parameter provided by the data link layer of the terminal device and/or the data link layer of the access network device for the application layer of the terminal device. The first service flow may be a first quality of service (quality of service, QoS) flow, or the first service flow may be a first data radio bearer (data radio bearer, DRB), or the first service flow may be a service flow having a first internet protocol (internet protocol, IP) attribute (for example, an IP quintuple).

It can be learned that, a perception layer header is carried in an uplink data packet, so that the application layer of the terminal device can implement information exchange with the data link layer of the terminal device and/or the data link layer of the access network device, the data link layer of the terminal device and/or the data link layer of the access network device can obtain a parameter provided by the application layer of the terminal device, or can provide a parameter for the application layer of the terminal device, and different protocol layers can efficiently interact with each other via the perception layer header, thereby helping improve data transmission efficiency.

In a possible implementation, the first perception layer header carries the first control information, the first control information includes first information, and the first information is used to request a first parameter. The method further includes: sending the first parameter to the first application layer based on the first information. In other words, the first perception layer header may carry the first information used by the application layer of the terminal device to request the data link layer of the terminal device to provide the first parameter.

In a possible implementation, the first perception layer header carries the first control information, the first control information includes second information, and the second information is used to request an access network device to provide a second parameter. The method further includes: sending the second information to the access network device. In other words, the first perception layer header may carry the second information used by the application layer of the terminal device to request the access network device to provide the second parameter.

In a possible implementation, sending the second information to the access network device includes: carrying the second information in a first data link layer header, and sending the first data link layer header to the access network device. The second information is carried in the first data link layer header, so that the access network device may not read the perception layer header, and this solution is universal.

In a possible implementation, the first perception layer header carries the first transmission parameter, and the first transmission parameter includes a third parameter. The method further includes: adjusting, based on the third parameter, a transmission policy of an uplink data packet corresponding to the first service flow. It can be learned that the data link layer of the terminal device may optimize data transmission based on the parameter provided by the application layer of the terminal device, thereby helping improve data transmission efficiency.

In a possible implementation, before receiving the first uplink data packet, the method further includes: carrying second control information in a second perception layer header, and sending the second perception layer header to the first application layer, where the second control information is used to request the third parameter. In other words, before the application layer of the terminal device provides the parameter to the data link layer, the data link layer may first carry, in the perception layer header, control information used to request the application layer to provide the parameter.

In a possible implementation, the first perception layer header carries the first transmission parameter, and the first transmission parameter includes a fourth parameter. The method further includes: carrying the fourth parameter in a second data link layer header, and sending the second data link layer header to the access network device. The fourth parameter is carried in the second data link layer header, so that the access network device may not read the perception layer header, and this solution is universal.

In a possible implementation, before receiving the first uplink data packet, the method further includes: receiving third control information from the access network device, where the third control information is used to request the fourth parameter; and sending the third control information to the first application layer. In other words, before providing the parameter for the data link layer of the access network device, the application layer of the terminal device may receive, from the access network device, the control information used to request the application layer to provide the parameter.

In a possible implementation, receiving the third control information from the access network device includes: receiving a fourth data link layer header from the access network device, where the fourth data link layer header carries the third control information. It can be learned that the access network device may carry the third control information in the data link layer header without modifying the perception layer header.

In a possible implementation, sending the third control information to the first application layer includes: carrying the third control information in a third perception layer header, and sending the third perception layer header to the first application layer. In other words, the terminal device may parse the fourth data link layer header to obtain the third control information, and then carry the third control information in the perception layer header.

In a possible implementation, the first transmission parameter includes at least one of the following: a data delay parameter, where the data delay parameter indicates a packet delay budget of a first data packet, and the first data packet is a data packet corresponding to the first service flow; a data sequence parameter, where the data sequence parameter indicates a sequence identifier corresponding to the first data packet; a data invalidation parameter, where the data invalidation parameter indicates a sequence identifier of an invalid data packet; and a data importance level parameter, where the data importance level parameter indicates an importance level of the first data packet.

In a possible implementation, the second transmission parameter includes at least one of the following: a reference transmission rate, where the reference transmission rate indicates a maximum transmission rate that can be provided by the access network device for the first service flow; a predicted transmission rate, where the predicted transmission rate indicates a maximum transmission rate that can be provided by the access network device for the first service flow at a prediction moment; and a data timing parameter, where the data timing parameter indicates time at which the access network device expects an application layer of a terminal device to send a data packet.

According to a second aspect, an embodiment of this application provides another communication method. The method may include: sending a first uplink data packet, where the first uplink data packet includes a first perception layer header, the first perception layer header carries first control information and/or a first transmission parameter, the first control information is used to request a second transmission parameter, the first transmission parameter is a parameter provided by a first application layer for a first data link layer, the second transmission parameter is a parameter provided by a second data link layer for the first application layer, and the first uplink data packet is a data packet corresponding to a first service flow.

It can be learned that, a perception layer header is carried in an uplink data packet, so that the application layer of the terminal device can implement information exchange with the data link layer of the terminal device and/or the data link layer of the access network device, the data link layer of the terminal device and/or the data link layer of the access network device can obtain a parameter provided by the application layer of the terminal device, or can provide a parameter for the application layer of the terminal device, and different protocol layers can efficiently interact with each other via the perception layer header, thereby helping improve data transmission efficiency.

In a possible implementation, the first perception layer header carries the first control information. The method further includes: receiving the second transmission parameter; and adjusting, based on the second transmission parameter, a transmission policy of an uplink data packet corresponding to the first service flow. In other words, the application layer of the terminal device may optimize data transmission based on a transmission parameter provided by the data link layer of the terminal device and/or the data link layer of the access network device, thereby improving data transmission efficiency.

In a possible implementation, the first perception layer header carries the first transmission parameter. Before sending the first uplink data packet, the method further includes: receiving fourth control information, where the fourth control information is used to request the first transmission parameter; and generating the first transmission parameter based on the fourth control information. In other words, the application layer of the terminal device may provide the transmission parameter for the data link layer of the terminal device and/or the data link layer of the access network device, so that the data link layer optimizes data transmission based on the parameter provided by the application layer.

According to a third aspect, an embodiment of this application provides still another communication method. The method may include: receiving a second uplink data packet from a terminal device, where the second uplink data packet includes a third data link layer header, the third data link layer header carries second information and/or a fourth parameter, the second information is used to request a second parameter, the second parameter is a parameter provided by a data link layer of an access network device for a first application layer, the fourth parameter is a parameter provided by the first application layer for the data link layer of the access network device, and the second uplink data packet is a data packet corresponding to a first service flow.

The second parameter may be understood as a parameter provided by the data link layer of the access network device for an application layer of the terminal device, and the fourth parameter may be understood as a parameter provided by the application layer of the terminal device for the data link layer of the access network device.

It can be learned that, the second information and/or the fourth parameter are/is carried in the uplink data packet sent by the terminal device to the access network device, so that the application layer of the terminal device can implement information exchange with the data link layer of the access network device, the data link layer of the access network device can obtain a parameter provided by the application layer of the terminal device, or can provide a parameter for the application layer of the terminal device, and different protocol layers can interact with each other, thereby improving data transmission efficiency.

In a possible implementation, the third data link layer header carries the fourth parameter. The method further includes: adjusting, based on the fourth parameter, a transmission policy of an uplink data packet corresponding to the first service flow. It can be learned that the data link layer of the access network device may optimize data transmission based on the parameter provided by the application layer of the terminal device, thereby helping improve data transmission efficiency.

In a possible implementation, before receiving the second uplink data packet from the terminal device, the method further includes: sending third control information to the terminal device, where the third control information is used to request the fourth parameter. In other words, before obtaining the parameter provided by the application layer of the terminal device, the data link layer of the access network device may first send control information used to request the application layer of the terminal device to provide the parameter.

In a possible implementation, sending the third control information to the terminal device includes: carrying the third control information in a first user plane part of GTP (user plane part of GTP, GTP-U) header, and sending the first GTP-U header to a core network device; receiving a third perception layer header from the core network device, where the third perception layer header carries the third control information; and sending the third perception layer header to the terminal device. In other words, the access network device may first send the third control information to the core network device, and the core network device carries the third control information in the perception layer header, and then sends the perception layer header carrying the third control information to the access network device. In this manner, the access network device may not modify the perception layer header.

In a possible implementation, sending the third control information to the terminal device includes: carrying the third control information in a fourth data link layer header, and sending the fourth data link layer header to the terminal device. In other words, the access network device may also directly send the third control information to the terminal device, and the terminal device carries the third control information in the perception layer header, and then sends the perception layer header carrying the third control information to the application layer of the terminal device. In this manner, the access network device may also not modify the perception layer header.

In a possible implementation, the third data link layer header carries the second information. The method further includes: sending the second parameter to the terminal device based on the second information. In other words, the data link layer of the access network device may provide the second parameter for the application layer of the terminal device.

In a possible implementation, sending the second parameter to the terminal device includes: carrying the second parameter in a second GTP-U header, and sending the second GTP-U header to the core network device; receiving a fourth perception layer header from the core network device, where the fourth perception layer header carries the second parameter; and sending the fourth perception layer header to the terminal device. In other words, the access network device may first send the second parameter to the core network device, and the core network device carries the second parameter in the perception layer header, and then sends the perception layer header carrying the second parameter to the access network device. In this manner, the access network device may not modify the perception layer header.

In a possible implementation, sending the second parameter to the terminal device includes: carrying the second parameter in a fifth data link layer header, and sending the fifth data link layer header to the terminal device. In other words, the access network device may also directly send the second parameter to the terminal device, and the terminal device carries the second parameter in the perception layer header, and then sends the perception layer header carrying the second parameter to the application layer of the terminal device. In this manner, the access network device may also not modify the perception layer header.

In a possible implementation, the method further includes: receiving a first downlink data packet from a core network device, where the first downlink data packet includes fifth control information and/or a third transmission parameter, the fifth control information is used to request a fourth transmission parameter, the third transmission parameter is a parameter provided by a second application layer for the data link layer of the access network device, the fourth transmission parameter is a parameter provided by the data link layer of the access network device for the second application layer, and the first downlink data packet is a data packet corresponding to the first service flow. The third transmission parameter may be understood as a parameter provided by an application layer of a server for the data link layer of the access network device, and the fourth transmission parameter may be understood as a parameter provided by the data link layer of the access network device for the application layer of the server.

In a possible implementation, the first downlink data packet includes the fifth control information. The method further includes: sending the fourth transmission parameter to the core network device based on the fifth control information. In other words, the access network device may first send, to the core network device, the parameter provided by the data link layer of the access network device for the application layer of the server, and then, the core network device may carry the parameter in the perception layer header, and send the perception layer header carrying the parameter to the server.

In a possible implementation, the first downlink data packet includes the third transmission parameter. The method further includes: adjusting, based on the third transmission parameter, a transmission policy of a downlink data packet corresponding to the first service flow. In other words, the data link layer of the access network device may optimize downlink data transmission based on the parameter provided by the application layer of the server, thereby helping improve data transmission efficiency.

In a possible implementation, before receiving the first downlink data packet from the core network device, the method further includes: sending sixth control information to the core network device, where the sixth control information is used to request the third transmission parameter. In other words, before receiving the parameter provided by the application layer of the server, the access network device can send, to the server via the core network device, control information used to request the parameter.

In a possible implementation, sending the sixth control information to the core network device includes: carrying the sixth control information in a third GTP-U header, and sending the third GTP-U header to the core network device. In other words, the access network device may carry, in a GTP-U header, control information used to request the application layer of the server to provide the parameter, and then send the GTP-U header to the core network device.

According to a fourth aspect, an embodiment of this application provides yet another communication method. The method may include: receiving a third uplink data packet from an access network device, where the third uplink data packet includes seventh control information and/or a fifth transmission parameter, the seventh control information is used to request a sixth transmission parameter, the sixth transmission parameter is a parameter provided by a third application layer for a third data link layer, the fifth transmission parameter is a parameter provided by a fourth data link layer for a fourth application layer, and the third uplink data packet is a data packet corresponding to a first service flow.

The fifth transmission parameter may include a parameter provided by a data link layer of the access network device for an application layer of a terminal device and/or an application layer of a server. The sixth transmission parameter may include a parameter provided by the application layer of the terminal device and/or the application layer of the server for the data link layer of the access network device.

It can be learned that the seventh control information and/or the fifth transmission parameter are/is carried in an uplink data packet sent by the access network device to the core network device, so that the data link layer of the access network device can implement information exchange with the application layer of the terminal device and/or the application layer of the server. The access network device can include all information exchanged with the application layer of the terminal device and/or the application layer of the server in the uplink data packet sent to the core network device. In this way, the core network device can carry the exchanged information in a perception layer header, and the access network device does not need to modify the perception layer header.

In a possible implementation, the third uplink data packet includes the seventh control information, the seventh control information includes third information, and the third information is used to request a terminal device to provide a fifth parameter. The method further includes: carrying the third information in a fifth perception layer header, and sending the fifth perception layer header to the access network device. In other words, the core network device may carry, in the perception layer header, control information sent by the access network device to the terminal device, and then send the perception layer header to the access network device, and the access network device sends the perception layer header to the terminal device.

In a possible implementation, the third uplink data packet includes the seventh control information, the seventh control information includes fourth information, and the fourth information is used to request a server to provide a sixth parameter. The method further includes: carrying the fourth information in a sixth perception layer header, and sending the sixth perception layer header to the server. In other words, the core network device may carry, in the perception layer header, control information sent by the access network device to the server, and then send the perception layer header to the server.

In a possible implementation, the method further includes: receiving a seventh perception layer header from the server, where the seventh perception layer header carries the sixth parameter; and carrying the sixth parameter in a fourth GTP-U header, and sending the fourth GTP-U header to the access network device. In other words, the core network device may parse, from the perception layer header from the server, the sixth parameter provided by the application layer of the server for the data link layer of the access network device, then carry the sixth parameter in the GTP-U header, and send the GTP-U header to the access network device.

In a possible implementation, the third uplink data packet includes the fifth transmission parameter, and the fifth transmission parameter includes a seventh parameter. The method further includes: carrying the seventh parameter in an eighth perception layer header, and sending the eighth perception layer header to the access network device. In other words, the core network device may carry, in the perception layer header, a transmission parameter sent by the access network device to the terminal device, and then send the perception layer header to the access network device, and the access network device sends the perception layer header to the terminal device.

In a possible implementation, the third uplink data packet includes the fifth transmission parameter, and the fifth transmission parameter includes an eighth parameter. The method further includes: carrying the eighth parameter in the eighth perception layer header, and sending the eighth perception layer header to the server. In other words, the core network device may carry, in the perception layer header, a transmission parameter sent by the access network device to the server, and then send the perception layer header to the server.

In a possible implementation, before receiving the third uplink data packet from the access network device, the method further includes: receiving eighth control information from the server, where the eighth control information is used to request the eighth parameter; and sending the eighth control information to the access network device. In other words, before receiving the eighth parameter provided by the access network device to the server, the core network device can first send, to the access network device, the eighth control information used by the server to request the eighth parameter.

According to a fifth aspect, an embodiment of this application provides still yet another communication method. The method may include: receiving a fourth uplink data packet from a core network device, where the fourth uplink data packet includes a ninth perception layer header, the ninth perception layer header carries fourth information and/or an eighth parameter, the fourth information is used to request a sixth parameter, the eighth parameter is a parameter provided by a data link layer of an access network device for a second application layer, the sixth parameter is a parameter provided by the second application layer for the data link layer of the access network device, and the fourth uplink data packet is a data packet corresponding to a first service flow.

The sixth parameter may be understood as a parameter provided by an application layer of a server for the data link layer of the access network device, and the eighth parameter may be understood as a parameter provided by the data link layer of the access network device for the application layer of the server.

It can be learned that a perception layer header is carried in an uplink data packet sent by the core network device to the server, information exchange between the data link layer of the access network device and the application layer of the server can be implemented. The application layer of the server can obtain a parameter provided by the data link layer of the access network device, or can provide a parameter to the data link layer of the access network device. Different protocol layers can efficiently interact with each other via the perception layer header, thereby improving data transmission efficiency.

In a possible implementation, the ninth perception layer header carries the fourth information. The method further includes: sending the sixth parameter to the core network device based on the fourth information. In other words, the server can first send, to the core network device, the parameter provided by the application layer of the server for the data link layer of the access network device, and the core network device forwards the parameter to the access network device.

In a possible implementation, sending the sixth parameter to the core network device includes: carrying the sixth parameter in a tenth perception layer header, and sending the tenth perception layer header to the core network device. In other words, the server can carry, in the perception layer header, the parameter provided by the application layer of the server for the data link layer of the access network device, and send the perception layer header to the core network device, and the core network device parses the sixth parameter from the perception layer header, and then forwards the sixth parameter to the access network device.

In a possible implementation, the ninth perception layer header carries the eighth parameter. The method further includes: adjusting, based on the eighth parameter, a transmission policy of a downlink data packet corresponding to the first service flow. It can be learned that the application layer of the server can optimize downlink data transmission based on the parameter provided by the data link layer of the access network device, thereby helping improve data transmission efficiency.

In a possible implementation, before receiving the fourth uplink data packet from the core network device, the method further includes: sending eighth control information to the core network device, where the eighth control information is used to request the eighth parameter. In other words, before receiving the eighth parameter provided by the access network device to the server, the server can first send, to the core network device, the eighth control information used to request the eighth parameter, and then, the core network device forwards the eighth control information to the access network device.

According to a sixth aspect, an embodiment of this application provides a further communication method. The method may include: A terminal device sends a first uplink data packet to an access network device, where the first uplink data packet includes a data link layer header, the data link layer header carries first control information, the first control information is used to request the access network device to provide a first transmission parameter, the first transmission parameter is a parameter provided by a data link layer of the access network device for an application layer of the terminal device, and the first uplink data packet is a data packet corresponding to a first service flow; the access network device receives the first uplink data packet, and sends a second uplink data packet to a core network device based on the first control information, where the second uplink data packet includes the first transmission parameter, and the second uplink data packet is a data packet corresponding to the first service flow; the core network device receives the second uplink data packet, and sends a first downlink data packet to the access network device based on the first transmission parameter, where the first downlink data packet includes a perception layer header, the perception layer header carries the first transmission parameter, and the first downlink data packet is a data packet corresponding to the first service flow; the core network device receives the first downlink data packet, and sends the first downlink data packet to the terminal device; and the terminal device receives the first downlink data packet, and adjusts, based on the first transmission parameter, a transmission policy of an uplink data packet corresponding to the first service flow.

According to a seventh aspect, an embodiment of this application provides a communication apparatus. The communication apparatus may be a terminal device, an apparatus in the terminal device, or an apparatus that can be used together with the terminal device. The communication apparatus may alternatively be a chip system. The communication apparatus may perform the method in the first aspect or the second aspect. A function of the communication apparatus may be implemented by hardware, or may be implemented by hardware executing corresponding software. The hardware or the software includes one or more units or modules corresponding to the foregoing function. The unit or module may be software and/or hardware. For operations performed by the communication apparatus and beneficial effect, refer to the method and the beneficial effect in the first aspect or the second aspect.

According to an eighth aspect, an embodiment of this application provides a communication apparatus. The communication apparatus may be an access network device, an apparatus in the access network device, or an apparatus that can be used together with the access network device. The communication apparatus may alternatively be a chip system. The communication apparatus may perform the method in the third aspect. A function of the communication apparatus may be implemented by hardware, or may be implemented by hardware executing corresponding software. The hardware or the software includes one or more units or modules corresponding to the foregoing function. The unit or module may be software and/or hardware. For operations performed by the communication apparatus and beneficial effect, refer to the method and the beneficial effect in the third aspect.

According to a ninth aspect, an embodiment of this application provides a communication apparatus. The communication apparatus may be a core network device, an apparatus in the core network device, or an apparatus that can be used together with the core network device. The communication apparatus may alternatively be a chip system. The communication apparatus may perform the method in the third aspect. A function of the communication apparatus may be implemented by hardware, or may be implemented by hardware executing corresponding software. The hardware or the software includes one or more units or modules corresponding to the foregoing function. The unit or module may be software and/or hardware. For operations performed by the communication apparatus and beneficial effect, refer to the method and the beneficial effect in the fourth aspect.

According to a tenth aspect, an embodiment of this application provides a communication apparatus. The communication apparatus may be a core network device, an apparatus in the core network device, or an apparatus that can be used together with the core network device. The communication apparatus may alternatively be a chip system. The communication apparatus may perform the method in the fourth aspect. A function of the communication apparatus may be implemented by hardware, or may be implemented by hardware executing corresponding software. The hardware or the software includes one or more units or modules corresponding to the foregoing function. The unit or module may be software and/or hardware. For operations performed by the communication apparatus and beneficial effect, refer to the method and the beneficial effect in the fourth aspect.

According to an eleventh aspect, an embodiment of this application provides a communication apparatus. The communication apparatus may be a server, an apparatus in the server, or an apparatus that can be used together with the server. The communication apparatus may alternatively be a chip system. The communication apparatus may perform the method in the fifth aspect. A function of the communication apparatus may be implemented by hardware, or may be implemented by hardware executing corresponding software. The hardware or the software includes one or more units or modules corresponding to the foregoing function. The unit or module may be software and/or hardware. For operations performed by the communication apparatus and beneficial effect, refer to the method and the beneficial effect in the fifth aspect.

According to a twelfth aspect, an embodiment of this application provides a communication apparatus. The communication apparatus includes a processor; and the processor is configured to perform the method in the first aspect, or the method in the second aspect, or the method in the third aspect, or the method in the fourth aspect, or the method in the fifth aspect.

According to a thirteenth aspect, an embodiment of this application provides a communication apparatus. The communication apparatus includes a processor; the processor is coupled to a memory; and the memory is configured to store a program or instructions. When the program or the instructions are executed by the processor, the communication apparatus is enabled to perform the method in the first aspect, or the method in the second aspect, or the method in the third aspect, or the method in the fourth aspect, or the method in the fifth aspect.

In a possible implementation, the communication apparatus further includes the memory. Optionally, the processor is integrated with the memory. Optionally, the memory and the processor are independently disposed.

According to a fourteenth aspect, an embodiment of this application provides a communication apparatus. The communication apparatus includes a processor and an interface circuit. The interface circuit is configured to: receive a signal from a communication apparatus other than the communication apparatus and transmit the signal to the processor; or send a signal from the processor to a communication apparatus other than the communication apparatus. The processor is configured to implement, through a logic circuit or by executing code instructions, the method in the first aspect, or the method in the second aspect, the method in the third aspect, or the method in the fourth aspect, or the method in the fifth aspect.

According to a fifteenth aspect, an embodiment of this application provides a computer-readable storage medium. The computer-readable storage medium stores a computer program or instructions. When the computer program or the instructions are executed by a communication apparatus, the method in the first aspect, or the method in the second aspect, or the method in the third aspect, or the method in the fourth aspect, or the method in the fifth aspect is implemented.

According to a sixteenth aspect, an embodiment of this application provides a computer program product including instructions. When a communication apparatus reads and executes the instructions, the communication apparatus is enabled to perform the method in the first aspect, or the method in the second aspect, or the method in the third aspect, or the method in the fourth aspect, or the method in the fifth aspect.

According to a seventeenth aspect, an embodiment of this application provides a communication system. The communication system includes a terminal device, an access network device, a core network device, and a server. The terminal device is configured to perform the method in the first aspect or the second aspect, the access network device is configured to perform the method in the third aspect, the core network device is configured to perform the method in the fourth aspect, and the server is configured to perform the method in the fifth aspect.

### BRIEF DESCRIPTION OF DRAWINGS

FIG. 1A is a diagram of a protocol stack architecture according to an embodiment of this application;
FIG. 1B is a diagram of a network architecture according to an embodiment of this application;
FIG. 2 is a diagram of a protocol stack architecture in which a perception layer is introduced according to an embodiment of this application;
FIG. 3A to FIG. 3D are a schematic flowchart of a communication method according to an embodiment of this application;
FIG. 4A and FIG. 4B are a diagram of sending a data packet by a UE-TLL according to an embodiment of this application;
FIG. 5A to FIG. 5C are a schematic flowchart of another communication method according to an embodiment of this application;
FIG. 6 is a diagram of a location of an SDP protocol in a protocol stack according to an embodiment of this application;
FIG. 7 is a diagram of a structure of a communication apparatus according to an embodiment of this application; and
FIG. 8 is a diagram of a structure of another communication apparatus according to an embodiment of this application.

### DESCRIPTION OF EMBODIMENTS

In this application, terms such as "first" and "second" are used for distinguishing between same items or similar items with basically same functions and roles. A person skilled in the art can understand that the terms "first", "second", and the like do not limit a quantity or an execution sequence, and the terms "first", "second", and the like do not indicate a definite difference. A term "and/or" describes only an association relationship between associated objects and indicates that there may be three relationships. For example, A and/or B may indicate the following three cases: Only A exists, both A and B exist, and only B exists. The character "/" usually indicates an "or" relationship between the associated objects.

It should be understood that, in this application, "at least one" means one or more, and "a plurality of" means two or more. In addition, "equal to" in this application may be used together with "greater than", or may be used together with "less than". When "equal to" and "greater than" are used together, a technical solution corresponding to "greater than" is used; and when "equal to" and "less than" are used together, a technical solution corresponding to "less than" is used.

In this application, "sending information to ... (for example, a terminal device)" may be understood as that a destination end of the information is the terminal device, and may include directly or indirectly sending the information to the terminal device. "Receiving information from ... (for example, a terminal device)" or "receiving information of ... (for example, a terminal device)" may be understood as that a source end of the information is the terminal device, and may include directly or indirectly receiving information from the terminal device. The information may undergo necessary processing, for example, a format change, between the source end and the destination end for information sending. However, the destination end may understand valid information from the source end. Similar descriptions in this application may be construed in a similar manner, and details are not described herein again.

The following first describes related names or terms in this application, to facilitate understanding by a person skilled in the art.

### I. Terminal device

The terminal device is a user-side device having a wireless transceiver function, may be a fixed device, a mobile device, a handheld device (for example, a mobile phone), a wearable device, a vehicle-mounted device, or a wireless apparatus (for example, a communication module, a modem, or a chip system) built in the foregoing device. The terminal device is configured to connect people, things, machines, and the like, and may be widely used in various scenarios, for example, cellular communication, device-to-device (device-to-device, D2D) communication, machine-to-machine/machine-type communication (machine-to-machine/machine-type communication, M2M/MTC) in V2X communication, an internet of things (internet of things, IoT), virtual reality (virtual reality, VR), augmented reality (augmented reality, AR), industrial control (industrial control), self-driving (self driving), telemedicine (remote medical), a smart grid (smart grid), smart furniture, smart office, smart wearable, smart transportation, smart city (smart city), an uncrewed aerial vehicle, and a robot. For example, the terminal device may be a handheld terminal in cellular communication, a communication device in D2D, an internet of things device in MTC, a surveillance camera in smart transportation and a smart city, or a communication device in an uncrewed aerial vehicle. The terminal device may sometimes be referred to as user equipment (user equipment, UE), a user terminal, a user apparatus, a subscriber unit, a subscriber station, a terminal, an access terminal, an access station, a UE station, a remote station, a mobile device, a wireless communication device, or the like. In embodiments of this application, an apparatus configured to implement a function of the terminal device may be the terminal device, or may be an apparatus that can support the terminal device in implementing the function, for example, a chip system or a combination device or component that can implement the function of the terminal device. The apparatus may be installed in the terminal device.

### 2. Access network device

The access network device is a network-side device having a wireless transceiver function. The access network device may be an apparatus that provides a wireless communication function for a terminal device in a radio access network (radio access network, RAN), and therefore may also be referred to as a RAN device. For example, the access network device may be a base station (base station), an evolved NodeB (evolved NodeB, eNodeB), a next generation NodeB (next generation NodeB, gNB) in a 5G mobile communication system, a transmission reception point (transmission reception point, TRP), a base station subsequently evolved in 3GPP, an access node in a Wi-Fi system, a wireless relay node, a wireless backhaul node, or the like. In communication systems using different radio access technologies (radio access technologies, RATs), names of devices having base station functions may be different. For example, the base station may be referred to as an eNB or an eNodeB in an LTE system, and may be referred to as a gNB in a 5G system or an NR system. A specific name of the base station is not limited in this application. The access network device may include one or more co-site or non-co-site transmission reception points. For another example, the access network device may include one or more central units (central units, CUs) and one or more distributed units (distributed units, DUs), or one or more CUs and one or more DUs.

For example, a function of the CU may be implemented by one entity or different entities. For example, the function of the CU is further divided. To be specific, a control plane and a user plane are separated and implemented by different entities: a control plane CU entity (namely, a CU-CP entity) and a user plane CU entity (namely, a CU-UP entity). The CU-CP entity and the CU-UP entity may be coupled to the DU to jointly complete a function of the access network device. In this way, some functions of a radio access network device may be implemented by a plurality of network function entities. These network functional entities may be network elements in a hardware device, or may be software functions running on dedicated hardware, or may be virtualization functions instantiated on a platform (for example, a cloud platform). For another example, in a vehicle to everything (vehicle to everything, V2X) technology, the access network device may be a road side unit (road side unit, RSU). A plurality of access network devices in the communication system may be base stations of a same type, or may be base stations of different types. The base station may communicate with the terminal device, or may communicate with the terminal device via a relay station. In embodiments of this application, an apparatus configured to implement a function of the access network device may be the access network device, or may be an apparatus that can support the access network device in implementing the function, for example, a chip system or a combination device or component that can implement the function of the access network device. The apparatus may be installed in the access network device. In embodiments of this application, the chip system may include a chip, or may include a chip and another discrete device.

### 3. Core network device

The core network device is configured to implement functions such as mobility management, data processing, session management, and policy and charging. Names of devices that implement core network functions in systems of different access technologies may be different. This is not limited in this application. A 5G network is used as an example. Logic network elements of the 5G core network (5GC) include an access and mobility management function (access and mobility management function, AMF), a session management function (session management function, SMF), a user plane function (user plane function, UPF), or the like. The AMF is a network element configured to perform access and mobility management on a terminal device, and mainly relates to functions such as location update, network registration, and handover control of the terminal device. The SMF is a network element configured to manage a session of the terminal device, and mainly relates to functions such as session establishment, modification, and release. The UPF is a network element configured to receive and forward user data. The UPF is controlled by the SMF. Different logic network elements in the 5GC may be deployed on a same physical device or different physical devices. For example, the AMF and the SMF may be deployed on a same physical device, or may be deployed on two physical devices. In addition, the logic network elements in the 5GC and network elements in a 4G core network may be deployed on a same physical device. An apparatus configured to implement a function of the core network device may be the core network device, or may be an apparatus that can support the core network device in implementing the function, for example, a chip system or a combination device or component that can implement the function of the core network device. The apparatus may be installed in the core network device.

### 4. Server

The server (Server) may be an application server corresponding to a plurality of services, and may provide a plurality of possible services for a terminal device. An application layer corresponding to an application layer of the terminal device may be disposed in the application server. In embodiments of this application, an apparatus configured to implement a function of the server may be the server, or may be an apparatus that can support the server in implementing the function, for example, a chip system or a combination device or component that can implement the function of the server. The apparatus may be installed in the server. In embodiments of this application, the chip system may include a chip, or may include a chip and another discrete device.

### 5. Protocol layer architecture

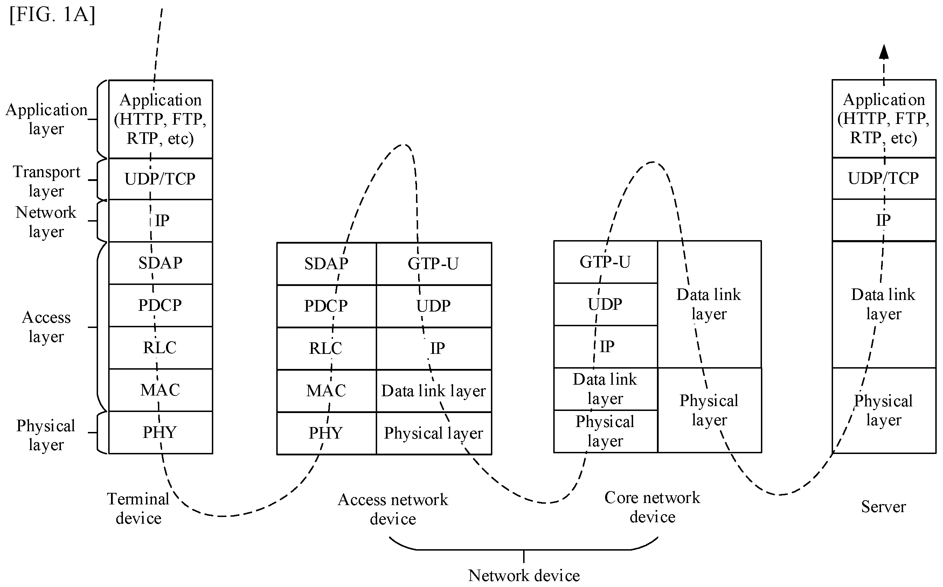

Communication between a terminal device, a network device, and a server complies with a specific protocol stack architecture. FIG. 1A is a diagram of a protocol stack architecture according to an embodiment of this application. As shown in FIG. 1A, an example in which the terminal device sends a data packet to the server via the network device is used. The data packet is transmitted sequentially through an application layer, a transport layer, a network layer, an access layer, and a physical layer of the terminal device, then is transmitted through an access layer, a data link layer, and a physical layer of the network device, and reaches a physical layer, a data link layer, a network layer, a transport layer, and an application layer of the server.

Protocols that can be used at the application layer may include a hypertext transfer protocol (hypertext transfer protocol, HTTP), a file transfer protocol (file transfer protocol, FTP), a real-time transport protocol (real-time transport protocol, RTP), and the like. Protocols that can be used at the transport layer may include a transmission control protocol (transmission control protocol, TCP), a user datagram protocol (user datagram protocol, UDP), and the like. Protocols that can be used at the network layer may include an internet protocol (internet protocol, IP), for example, an IPv4 protocol or an IPv6 protocol. The access layer may include a service data adaptation (service data adaptation protocol, SDAP) layer, a packet data convergence protocol (packet data convergence protocol, PDCP) layer, a radio link control (radio link control, RLC) layer, a media access control (media access control, MAC) layer, and a physical layer (physical layer, PHY).

### 6. Interaction between different protocol layers

Currently, different protocol layers are designed independently and run independently, logic of each protocol layer is completed independently in a modular division manner, and effective interaction is lacking between the different protocol layers. Interaction content lacking at the different protocol layers includes but is not limited to the following content:

### (1) A transport layer lacks interaction of a bandwidth capability of an access layer.

In a process in which a sender (for example, a terminal device) transmits data to a receiver (for example, a network device), congestion may occur during data transmission due to limited radio resources and instability of a radio channel. When congestion occurs, if the sender continues to send a large quantity of data packets, a data packet transmission delay may be increased or data packets may be lost. Therefore, congestion control is required.

In an implementation, the sender may prevent, according to a TCP congestion control algorithm, excessive data from being injected into a network. Specifically, a transport layer of the sender may maintain a congestion window (congestion window, Cwnd), and continuously attempt to increase a rate from a low transmission rate to a high rate according to a climbing strategy. To be specific, a small value of the congestion window is first used. If it is determined that no congestion occurs in the network, the value of the congestion window is gradually increased, and more data packets are sent. In this manner, if a bandwidth capability of the access layer is high, a process of performing probing according to the climbing strategy consumes a large amount of time. For example, it is assumed that the access layer can provide a maximum transmission rate of 1 Tbps. Hundreds of milliseconds are consumed by the transport layer to perform probing from 1 Mbps to 1 Tbps, resulting in low bandwidth utilization.

It can be learned that, if the transport layer can learn of the bandwidth capability of the access layer, time consumed in a probing transmission process can be shortened, and transmission efficiency can be improved.

### (2) An application layer lacks interaction of a bandwidth prediction capability of the access layer.

The application layer of the sender may adjust application layer coding based on an actual transmission rate at which the data arrives at the receiver, to adapt to a channel. For example, it is assumed that the sender transmits 1080p video data. If frame freezing occurs in a process of playing a video by the receiver, the application layer of the sender can automatically adjust to transmit 720p video data, to reduce a bandwidth requirement on the access layer, so as to avoid frame freezing in the playing process. However, in this adjustment manner, adjustment is usually performed only after a channel change affects data transmission. That is, application layer coding is adjusted only after a period of frame freezing occurs in the video playing process, resulting in low stability of data transmission.

It can be learned that if the application layer can learn of the bandwidth change predicted by the access layer, coding can be adjusted in advance, to avoid frame freezing.

### (3) The access layer lacks interaction of an attribute of a data packet of the application layer.

For service flows controlled by a same QoS flow, the access layer of the base station uses same transmission processing (for example, scheduling), and data packets belonging to a same service are usually placed in the same QoS flow. However, data packets belonging to a same service may have different QoS requirements, so that an attribute of the entire QoS flow is set based on a data packet with a highest QoS requirement. For example, it is assumed that a packet delay budget (packet delay budget, PDB) of a part of data packets in a QoS flow is 10 ms and a PDB of the other part of data packets is 20 ms. In this case, the base station schedules the entire QoS flow based on the PDB requirement of 10 ms. This affects capacity of the base station.

It can be learned that if the access layer can distinguish between data packets with different attributes (such as PDBs and data packet importance) in a same QoS flow, the access layer can use different transmission policies for the data packets with the different attributes, to increase resource utilization.

### (4) The access layer lacks interaction of an invalid data packet of the application layer.

In a continuous data packet transmission scenario, for example, a scenario in which a server transmits artificial intelligence (artificial intelligence, AI) model data to UE in a downlink manner, or a scenario in which UE transmits three-dimensional model data to a server in an uplink manner, the application layer usually generates data and then sends the data to the access layer, and then, the access layer sends the data. In actual application, in a process in which the application layer transmits first model data, due to a scenario change, the first model data may need to be switched to second model data for transmission. In this case, the application layer selects to terminate sending of remaining data in the first model data, and starts to send the second model data. However, after the application layer terminates sending of the remaining data in the first model data, data that has been sent from the application layer to the access layer in the first model data becomes invalid. In this case, for the data that has been sent from the application layer to the access layer in the first model data, the access layer starts a discard timer based on a PDB requirement, and continues to send the invalid data before the discard timer expires. This not only affects a sending delay of the second model data, but also increases an air interface load.

It can be learned that if the access layer can learn of the invalid data packet, the air interface load can be reduced.

### (5) The access layer lacks interaction of sending time of data packets of the application layer.

For a periodic service, if time at which a plurality of data packets in the periodic service arrive at the access layer of the base station is close to each other, and required PDBs of the data packets are low, the base station needs to schedule a large quantity of data packets in a short period of time, resulting in high capacity pressure of the base station.

It can be learned that if the access layer can provide the sending time of the data packets of the application layer, so that the time for the application layer to send the data packets is dispersed. This helps relieve scheduling pressure of the base station.

### 7. RTP protocol

The RTP protocol is a network transport protocol, and is usually created on a user datagram protocol (user datagram protocol, UDP). An RTP data packet including an RTP header may be formed after network transport RTP protocol encapsulation. Currently, if the RTP protocol is used at an application layer, the RTP header may be used to carry some application layer information, so that the application layer information is provided for another protocol layer for transmission optimization. For example, the RTP header carries attribute information of the data packet, so that an access layer can distinguish between data packets with different attributes (such as a PDB and data packet importance), and different transmission policies can be used for the data packets with different attributes. However, this manner of using the RTP protocol is not universal. If the RTP protocol is not used at the application layer, information exchange between the application layer and another protocol layer cannot be implemented. In addition, this manner also lacks a mechanism for the another protocol layer (for example, the access layer) to feed back information to the application layer.

In view of this, this application provides a communication method and apparatus, to efficiently exchange information between different protocol layers, and achieve universality, thereby improving transmission efficiency.

Embodiments of this application may be applied to various communication systems, for example, a long term evolution (long term evolution, LTE) system, a 5th generation (5th generation, 5G) system, a new radio (new radio, NR) system, a wireless fidelity (wireless-fidelity, Wi-Fi) system, a communication system related to the 3rd generation partnership project (3rd generation partnership project, 3GPP), and another communication system that may appear in the future, for example, a 6th generation (6th generation, 6G) mobile communication system. Embodiments of this application may further be applied to a device-to-device (device-to-device, D2D) communication system, a vehicle-to-everything (vehicle-to-everything, V2X) communication system, a machine-to-machine (machine-to-machine, M2M) communication system, a machine type communication (machine-type communication, MTC) system, an internet of things (internet of things, IoT) communication system, or another communication system. For ease of description, a 5G system is used as an example for description in this application.

The following describes a network architecture to which embodiments of this application are applicable.

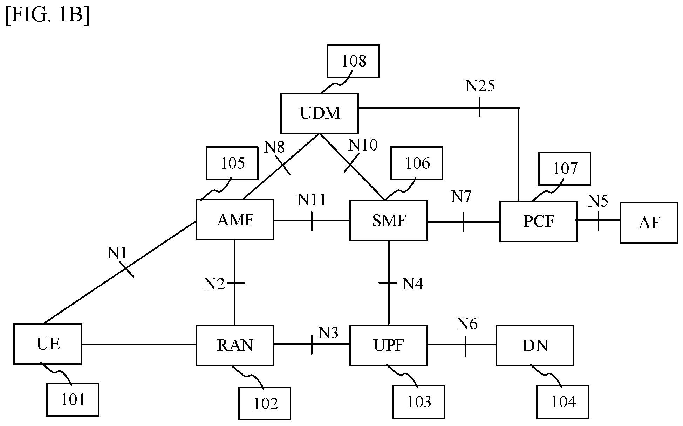

FIG. 1B is a diagram of a network architecture according to an embodiment of this application. As shown in FIG. 1B, for example, the network architecture is a 5G system, and may include three parts: a terminal device part, an operator network part, and a data network 104 (data network, DN) part.

The terminal device part includes a terminal device 101, and the terminal device 101 may also be referred to as user equipment (user equipment, UE). The terminal device 101 in embodiments of this application is a device having a wireless transceiver function, and may communicate with one or more core networks (core networks, CNs) through a RAN 102.

The operator network may include unified data management (unified data management, UDM) 108, an access and mobility management function (access and mobility management function, AMF) 105, a session management function (session management function, SMF) 106, a policy control network element (Policy Control Function, PCF) 107, a user plane function (user plane function, UPF) 103, the RAN 102, and the like. In the operator network, a part other than the RAN part may be referred to as a core network (core network, CN) part or a core network part.

The data network DN 104 may also be referred to as a protocol data network (protocol data network, PDN), and is usually a network outside the operator network, for example, a third-party network. The operator network may access a plurality of data networks DN 104, and a plurality of services may be deployed on the data network DN 104, to provide services such as a data service and/or a voice service for the terminal device.

The following briefly describes network functions in the operator network.

The RAN 102 may be considered as a sub-network of the operator network, and is an implementation system between a service node in the operator network and the terminal device. To access the operator network, the terminal device first passes through the RAN 102, and then may be connected to the service node in the operator network through the RAN 102. An access network device in embodiments of this application is a device that provides a wireless communication function for the terminal device, and may also be referred to as a network device.

The access and mobility management function AMF 105 (which may also be referred to as an AMF network element, an AMF network function, or an AMF network function entity) is a control plane network function provided by the operator network, and is responsible for access control and mobility management for accessing the operator network by the terminal device, for example, including functions such as mobility status management, temporary user identity allocation, and user authentication and authorization.

The session management function SMF 106 (which may also be referred to as an SMF network element, an SMF network function, or an SMF network function entity) is a control plane network function provided by the operator network, and is responsible for managing a protocol data unit (protocol data unit, PDU) session of the terminal device.

The user plane function UPF 103 (which may also be referred to as a UPF network element, a UPF network function, or a UPF network function entity) is a gateway provided by an operator, is a gateway for communication between the operator network and the data network DN 104, and is mainly responsible for processing a user packet, for example, forwarding and charging the user packet.

The unified data management network element UDM 108 (which may also be referred to as a UDM network element, a UDM network function, or a UDM network function entity) is a control plane function provided by the operator, and is responsible for storing information such as a subscription permanent identifier (subscriber permanent identifier, SUPI) of a subscriber in an operator network, a generic public subscription identifier (generic public subscription identifier, GPSI) of the subscriber, and a credential (credential). The SUPI is first encrypted during transmission, and the encrypted SUPI is referred to as a subscription concealed identifier (subscription concealed identifier, SUCI). The information stored in the UDM 108 may be used for authentication and authorization for the terminal device to access the operator network.

The policy control network element (policy control function, PCF) 107 provides policies, such as a QoS policy and a slice selection policy, for the AMF and the SMF.

An application function AF interacts with a 3GPP core network to provide an application layer service, for example, provide application layer data routing and provide access network capabilities. The AF may interact with the PCF 107. The AF may be located inside or outside a 5G core network. If the AF is located inside the 5G core network, the AF may directly interact with the PCF 107. If the AF is located outside the 5G core network, a network exposure function (Network Exposure Function, NEF) serves as an intermediate node to forward content exchanged between the AF and the PCF 107. For example, forwarding is performed through the NEF.

In FIG. 1B, N1, N2, N3, N5, N6, N7, N8, N10, and N11 are interface sequence numbers. For meanings of these interface sequence numbers, refer to meanings defined in the 3GPP standard protocol. Details are not described herein. It should be noted that, in FIG. 1B, an example in which the terminal device is UE 101 is merely used for description, and names of interfaces between network functions in FIG. 1B are merely examples. In specific implementation, the names of the interfaces in the system architecture may alternatively be other names. This is not specifically limited in embodiments of this application.

The following describes the method provided in embodiments of this application in with reference to accompanying drawings. Before embodiments are described, some terms in embodiments of this application are uniformly explained.

### (1) Data transmission optimization

In this application, data transmission optimization means that, some parameters of data transmission are adjusted, so that performance of data transmission better adapts to current communication and system capacity. Specifically, data transmission optimization may be one of the following two types of data transmission optimization: 1. The application layer optimizes data transmission based on a parameter provided by a data link layer, for example, adjusts a transmission window during data transmission, or adjusts a decision on a sending rate during data transmission. 2. The data link layer optimizes data transmission based on a parameter provided by the application layer, for example, adjusts scheduling time during data transmission, or discards invalid data during data transmission.

### (2) Transmission parameters of a data link

The transmission parameters of the data link in this application are some parameters associated with transmission of the data link, for example, a rate of the data link, a predicted rate of the data link, reliability information of the data link, load information of the data link, signal quality or signal strength of the data link, or another parameter associated with transmission of the data link. This is not limited in this application.

### (3) Data packet service attribute information

The data packet service attribute information in this application is some attribute information of a data packet in a service to which the data packet belongs, for example, data packet importance information, data packet delay requirement information, data packet integrity requirement information, data packet invalidation information, a service type (such as voice, video, or game) of the data packet, coding information (such as a coding type, coding resolution, and a frame rate) of the data packet, jitter information of the data packet, an application protocol type of the data packet, and a transport layer protocol type of the data packet. This is not limited in this application.

### (4) IP quintuple

In embodiments of this application, the IP quintuple may be used to uniquely determine a service flow. The IP quintuple may include a source IP address, a destination IP address, a source port, a destination port, and communication protocol information.

### (5) Data packets

The data packets (such as a first uplink data packet and a second uplink data packet) in this application are all data packets corresponding to a same service flow, for example, data packets corresponding to a first service flow. The first service flow may be a first QoS flow, or the first service flow may be a first data radio bearer (data radio bearer, DRB), or the first service flow may be a service flow having a first IP attribute (for example, an IP quintuple).

It should be noted that an application layer (for example, an application layer of a terminal device or an application layer of a server) in embodiments of this application may also be described as a traffic logic layer (traffic logic layer, TLL). The TLL may include an HTTP protocol, an RTP protocol, a real-time transport control protocol (real-time transport control protocol, RTCP), an FTP protocol, and the like, or may include some transport layer protocols, for example, a quick UDP internet connection (quick UDP internet connection, QUIC) protocol, or another transfer protocol over TCP/UDP. The data link layer (data link layer, DLL) in embodiments of this application may include an air interface protocol layer of a 5G system, for example, PHY layers, MAC layers, RLC layers, PDCP layers, and SDAP layers of the terminal device and the access network device in FIG. 1A, may also include a Wi-Fi air interface protocol layer, and may further include a data link layer of a wired network (for example, an Ethernet). It may be understood that the application layer (TLL) and the data link layer (DLL) in embodiments of this application are defined only for distinguishing between different functions, and may also be replaced with other names. This is not limited in this application.

In embodiments of this application, to implement efficient interaction between different protocol layers, a perception layer is introduced to transfer interaction information between the different protocol layers. Optionally, the perception layer may be placed between the TLL and the DLL. The perception layer may be disposed above a transport layer (TCP/UDP), or may be disposed at another location. For example, the perception layer may be disposed in an extension header of a network layer (IP), or may be disposed in an extension header of another protocol layer. This is not limited in this application.

It should be noted that the perception layer is a name of a layer that is introduced in this application and that is used to transfer the interaction information between the different protocol layers. In embodiments of this application, the perception layer may also be described as a vertical interaction and awareness layer (vertical interaction and awareness protocol, VIAP), or an interaction layer, or an interaction and awareness layer, or another name. Names of layers having the foregoing functions are not limited in this application.

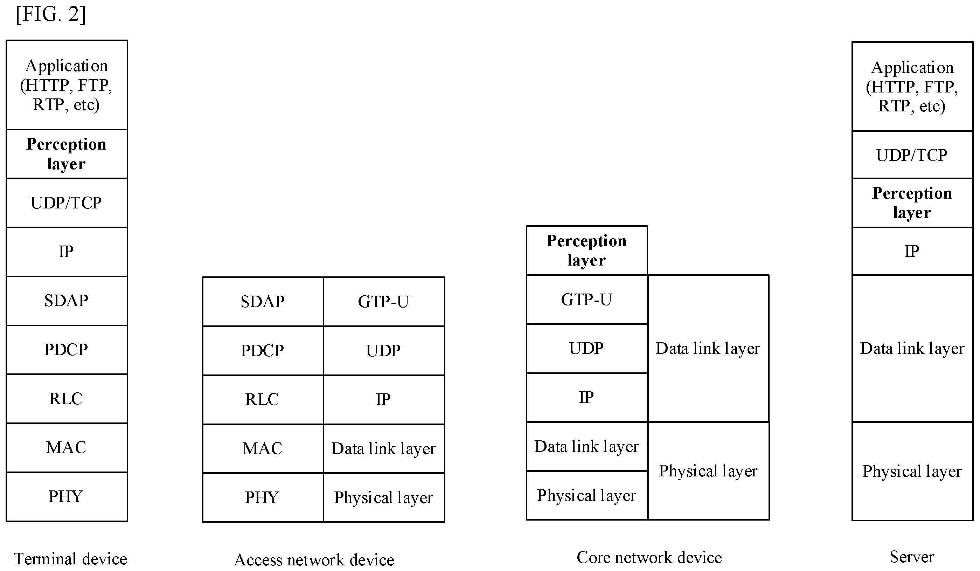

For example, FIG. 2 is a diagram of a protocol stack architecture in which a perception layer is introduced according to an embodiment of this application. As shown in FIG. 2, the perception layers may be disposed above transport layers of a terminal device and a server, and may also be disposed above a user plane part of GTP (user plane part of GTP, GTP-U) protocol layer of a core network device. For ease of description, in embodiments of this application, an example in which the terminal device is UE, an access network device is a RAN, and the core network device is a CN is used for description. The perception layer of the terminal device (UE-perception layer) may be located between a TLL of the terminal device (UE-TLL) and a DLL of the terminal device (UE-DLL), the perception layer of the server (Server-perception layer) may be located between a TLL of the server (Server-TLL) and a DLL of the access network device (for example, RAN-DLL), and the perception layer of the core network device (CN-perception layer) is located above the CN-GTP-U layer. In FIG. 2, bidirectional interaction between the UE-TLL and the UE-DLL, between the UE-TLL and the RAN-DLL, and between the server-TLL and the RAN-DLL may be implemented based on the perception layers. For ease of understanding, the protocol stack architecture shown in FIG. 2 is used as an example for description in embodiments of this application.

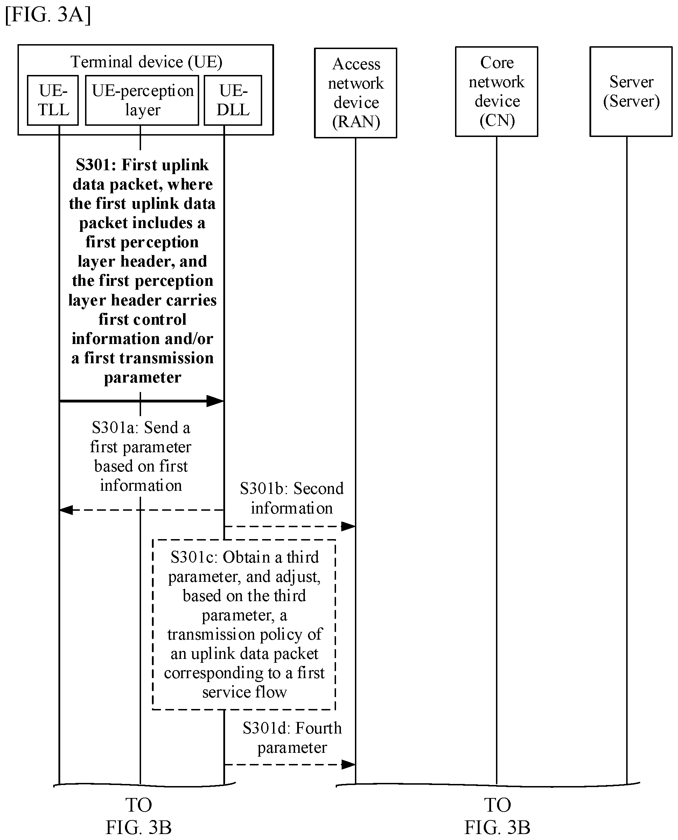

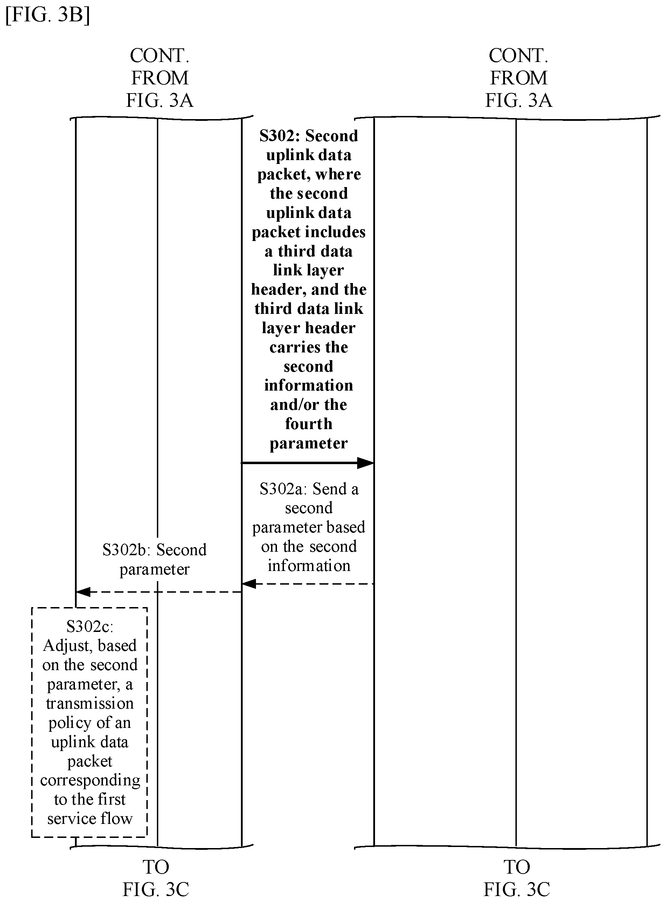

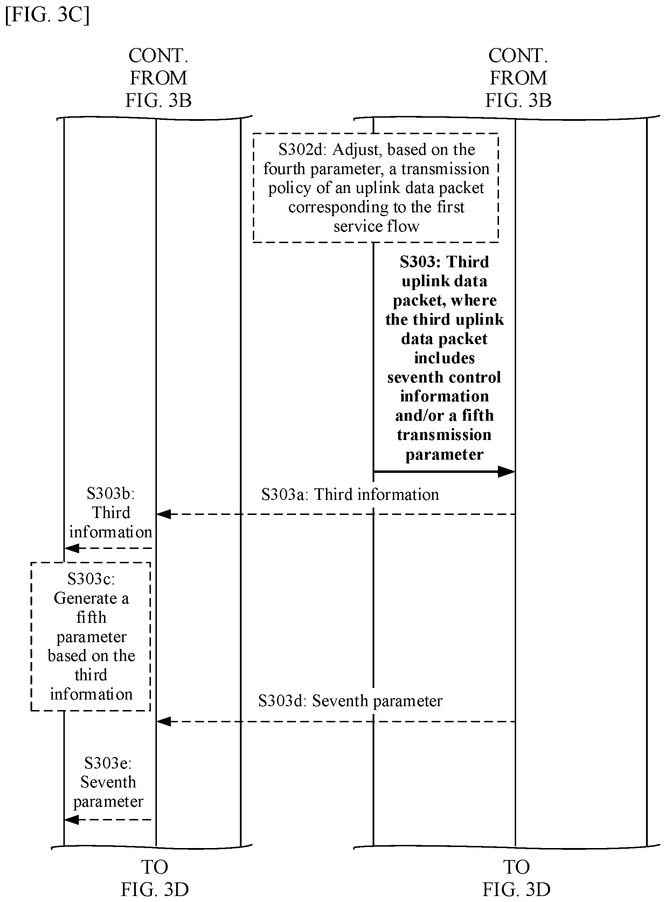

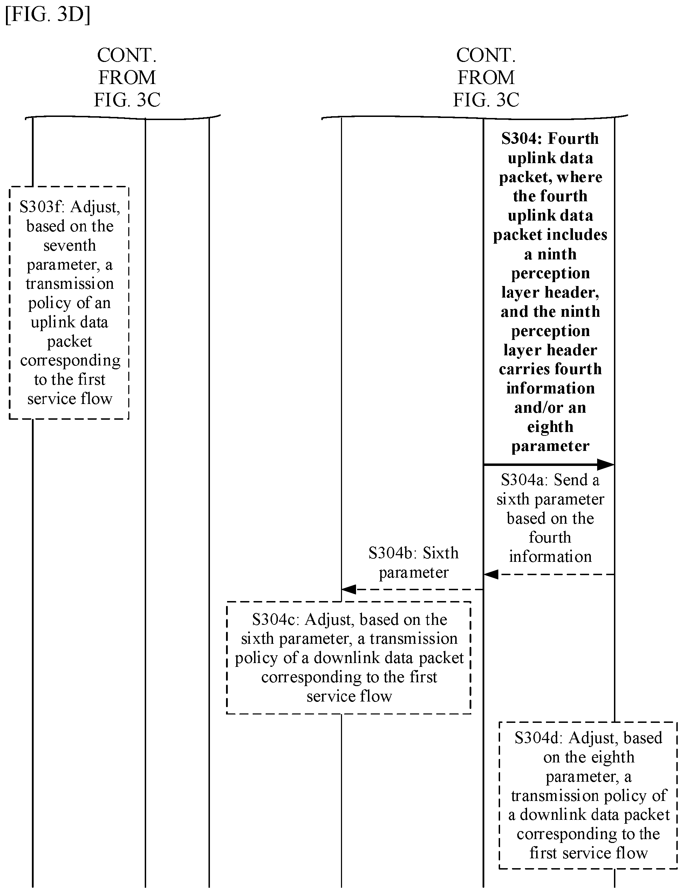

Uplink transmission is used as an example. FIG. 3A to FIG. 3D are a schematic flowchart of a communication method according to an embodiment of this application. The method may include but is not limited to the following steps.

S301: A UE-TLL sends a first uplink data packet to a UE-DLL. Correspondingly, the UE-DLL receives the first uplink data packet from the UE-TLL. The first uplink data packet includes a first perception layer header, and the first perception layer header carries first control information and/or a first transmission parameter.

For the first control information, the first control information may be used to request a second transmission parameter, and the second transmission parameter may be used by a TLL to optimize data transmission. Therefore, the second transmission parameter may also be understood as a parameter provided by a DLL for the UE-TLL. Specifically, the second transmission parameter may include a transmission parameter of a data link. Optionally, the second transmission parameter may include a reference transmission rate, and the reference transmission rate may indicate a maximum transmission rate that can be provided by the DLL for a first service flow. The second transmission parameter may also include a predicted transmission rate, and the predicted transmission rate may indicate a maximum transmission rate that can be provided by the DLL for the first service flow at a prediction moment. The second transmission parameter may further include a data timing parameter, and the data timing parameter may indicate time at which the DLL expects the UE-TLL to send a data packet.

The DLL may be the UE-DLL and/or a RAN-DLL. Descriptions are separately provided in Scenario 1 and Scenario 2.

Scenario 1: The UE-TLL requests the second transmission parameter from the UE-DLL. To distinguish from Scenario 2, in this scenario, the second transmission parameter is described as a first parameter, and the first control information in this scenario is described as first information. The first parameter may be understood as a parameter provided by the UE-DLL for the UE-TLL. The first parameter may be used by the TLL to optimize data transmission. The first parameter may include a transmission parameter of a data link. In other words, a terminal device may carry the first information in a first perception layer header of the first uplink data packet, to control, based on the first information, the UE-DLL to provide the first parameter for the UE-TLL. For details, refer to S301a.

S301a: The UE-DLL sends the first parameter to the UE-TLL based on the first information. Correspondingly, the UE-TLL receives the first parameter from the UE-DLL.

After receiving the first uplink data packet from the UE-TLL, the UE-DLL can parse the first perception layer header of the first uplink data packet to obtain the first information, then generate the first parameter based on the first information, and send the first parameter to the UE-TLL. Further, the UE-TLL may adjust, based on the first parameter, a transmission policy of an uplink data packet corresponding to the first service flow.

Scenario 2: The UE-TLL requests the second transmission parameter from the RAN-DLL. To distinguish from Scenario 1, in this scenario, the second transmission parameter is described as a second parameter, and the first control information in this scenario is described as second information. For example, the second parameter may be understood as a parameter provided by a RAN (for example, the RAN-DLL) for the UE-TLL. The second parameter may include a parameter of the data link. The second parameter may be used by the TLL to optimize data transmission. For details, refer to S301b.

S301b: The UE-DLL sends the second information to the RAN. Correspondingly, the RAN receives the second information from the UE-DLL.

The UE-DLL can parse the first perception layer header of the first uplink data packet to obtain the second information, then carry the second information in a first data link layer header, and send the first data link layer header to the RAN. This is because an access network device usually does not parse header content above a network layer. In this manner, the access network device may not parse the first perception layer header from the first uplink data packet, so that this application is universal. Optionally, the UE-DLL can alternatively forward the first perception layer header to the access network device, so that the access network device obtains the second information by parsing the first perception layer header. Optionally, the first data link layer header may be a data link layer header of the first uplink data packet, or may be a data link layer header of another uplink data packet corresponding to the first service flow, for example, a data link layer header of an uplink data packet A or an uplink data packet B. Optionally, the data link layer header (for example, the first data link layer header) in this embodiment of this application may be an SDAP header, a PDCP header, an RLC header, or another data link layer header. This is not limited in embodiments of this application.

For the first transmission parameter, the first transmission parameter may be used by the DLL to optimize data transmission. Therefore, the first transmission parameter may also be understood as a parameter provided by the UE-TLL for the DLL, and the first transmission parameter may include data packet service attribute information. Optionally, the first transmission parameter may include a data delay parameter, the data delay parameter may indicate a packet delay budget of a first data packet, and the first data packet may be a data packet corresponding to the first service flow. The first transmission parameter may also include a data sequence parameter, and the data sequence parameter may indicate a sequence identifier corresponding to the first data packet. The first transmission parameter may further include a data invalidation parameter, and the data invalidation parameter may indicate a sequence identifier of an invalid data packet. The first transmission parameter may further include a data importance level parameter, and the data importance level parameter may indicate an importance level of the first data packet.

In some embodiments, the UE-TLL may receive a second perception layer header, where the second perception layer header may carry second control information, and the second control information may be used to request the UE-TLL to provide the first transmission parameter. Optionally, the second perception layer header may be a perception layer header of a downlink data packet corresponding to the first service flow. In other words, the terminal device may carry the second control information in the second perception layer header of the downlink data packet corresponding to the first service flow, to control, based on the second control information, the UE-TLL to provide the first transmission parameter for the UE-DLL.

The DLL may be the UE-DLL and/or the RAN-DLL. Descriptions are separately provided in Scenario 3 and Scenario 4.

Scenario 3: The UE-TLL provides the first transmission parameter for the UE-DLL. To distinguish from Scenario 4, in this scenario, the first transmission parameter is described as a third parameter, and the third parameter may be understood as a parameter provided by the UE-TLL for the UE-DLL. The third parameter may be used by the UE-DLL to optimize data transmission. The third parameter may include the data packet service attribute information. For details, refer to S301c.

S301c: The UE-DLL obtains the third parameter, and adjusts, based on the third parameter, a transmission policy of an uplink data packet corresponding to the first service flow.

In some embodiments, the second control information may be used to request the UE-TLL to provide a data delay parameter. In other words, the third parameter may be the data delay parameter. The UE-DLL may adjust, based on the data delay parameter, the transmission policy of the uplink data packet corresponding to the first service flow. The data delay parameter may indicate a packet delay budget (PDB) of a first data packet, and the first data packet is a data packet corresponding to the first service flow.

Optionally, the data delay parameter may indicate the PDB of the first data packet, or may indicate a PDB offset of the first data packet.

When the data delay parameter indicates the PDB of the first data packet, after obtaining the PDB of the first data packet, the UE-DLL can adjust a discard timer based on the PDB of the first data packet. For example, it is assumed that the discard timer of the first data packet is originally specified as 10 ms based on a reference PDB of the first service flow, and the UE-DLL determines, based on the data delay parameter, that the PDB of the first data packet is 12 ms. In this case, the UE-DLL can start the discard timer based on the PDB of 12 ms, in other words, the first data packet is discarded only when the first data packet is not sent after the discard timer counts 12 ms.

When the data delay parameter indicates the PDB offset of the first data packet, after obtaining the PDB offset of the first data packet, the UE-DLL can determine the PDB of the first data packet based on a reference PDB of the first service flow and the PDB offset of the first data packet, and then adjust the discard timer based on the PDB of the first data packet. For example, it is assumed that the reference PDB of the first service flow is 10 ms, and the UE-DLL determines, based on the data delay parameter, that the PDB offset of the first data packet is 2 ms. In this case, the UE-DLL can determine that the PDB of the first data packet is 12 ms, and start the discard timer based on the PDB of 12 ms.

In some implementation scenarios, a PDB of the uplink data packet and a PDB of the downlink data packet jointly affect a total data transmission delay, and further affect user experience. A game scenario is used as an example. Time from a moment at which the terminal device receives a user operation to a moment at which the terminal device transmits an uplink data packet and time from a moment at which a server renders a game picture to a moment at which the server transmits a downlink data packet jointly determine user experience. If the time from the moment at which the terminal device receives the user operation to the moment at which the terminal device transmits the uplink data packet is longer, the time from the moment at which the server renders the game picture to the moment at which the server transmits the downlink data packet may be adjusted to be shorter. Correspondingly, if the time from the moment at which the server renders the game picture to the moment at which the server transmits the downlink data packet is longer, the time from the moment at which the terminal device receives the user operation to the moment at which the terminal device transmits the uplink data packet may be adjusted to be shorter. In this embodiment of this application, the UE-TLL may provide the data delay parameter for the UE-DLL, so that the UE-DLL can flexibly adjust the PDB of the uplink data packet based on the data delay parameter.

Scenario 4: The UE-TLL requests the first transmission parameter from the RAN-DLL. To distinguish from Scenario 3, in this scenario, the first transmission parameter is described as a fourth parameter, and the fourth parameter may be understood as a parameter provided by the UE-TLL for the RAN-DLL. The fourth parameter may be used by the RAN-DLL to optimize data transmission. The fourth parameter may include data packet service attribute information. For details, refer to S301d.

S301d: The UE-DLL sends the fourth parameter to the RAN. Correspondingly, the RAN receives the fourth parameter from the UE-DLL.

The UE-DLL can parse the first perception layer header of the first uplink data packet to obtain the fourth parameter, then carry the fourth parameter in a second data link layer header, and send the second data link layer header to the RAN. Optionally, the second data link layer header may be a data link layer header of the first uplink data packet, or may be a data link layer header of another uplink data packet corresponding to the first service flow.

It may be understood that Scenario 1 to Scenario 4 may be randomly combined. To be specific, the terminal device may include any one of the first information, the second information, the third parameter, and the fourth parameter in the first perception layer header of the first uplink data packet, or may include any combination of the four parameters. This may be specifically determined based on an actual requirement.

Optionally, when the terminal device carries the first information in the first perception layer header, the terminal device can delete the first information from the first perception layer header when the UE-DLL performs step S301a or after the UE-DLL performs step S301a. Similarly, when the terminal device carries the third parameter in the first perception layer header, the terminal device can delete the third parameter from the first perception layer header when the UE-DLL performs step S301c or after the UE-DLL performs step S301c. This helps reduce bit overheads.

S302: The UE-DLL sends a second uplink data packet to the RAN. Correspondingly, the RAN receives the second uplink data packet from the UE-DLL. The second uplink data packet includes a third data link layer header, and the third data link layer header carries the second information and/or the fourth parameter.

S302 is a procedure for Scenario 2 and Scenario 4. Specifically, after the UE-DLL receives the first uplink data packet of the UE-TLL, the UE-DLL learns of the second information and/or the fourth parameter, and the UE-DLL can send these parameters to the RAN. The UE-DLL may perform some processing on the first uplink data packet before sending the first uplink data packet to the RAN device, or when the UE-DLL learns of the second information and/or the fourth parameter and a new data packet needs to be sent, the UE-DLL places the second information and/or the fourth parameter in the new data packet and sends the new data packet to the RAN. Therefore, the second uplink data packet is introduced as an uplink data packet sent by the UE-DLL to the RAN. It should be noted that the first uplink data packet may be the same as or different from the second uplink data packet. In different scenarios, the UE-DLL can modify some content of the first uplink data packet to obtain the second uplink data packet.

Optionally, an identifier of the second uplink data packet may be the same as or different from an identifier of the first uplink data packet. Herein, the second information and/or the fourth parameter are/is carried in the third data link layer header, so that the access network device may not parse a protocol layer above the network layer (IP).

In some embodiments, the third data link layer header may carry the second information. After the RAN obtains the second information, the RAN may send the second parameter to the terminal device based on the second information. Optionally, the RAN may send the second parameter to the terminal device in either of the following two manners:
Manner 1: The RAN directly sends the second parameter to the terminal device.

S302a: The RAN sends the second parameter to the UE based on the second information. Correspondingly, the UE receives the second parameter from the RAN.

The RAN may generate the second parameter based on the second information, carry the second parameter in a data link layer header, and then send the data link layer header to the UE-DLL. The access network device may include, in the downlink data packet corresponding to the first service flow, the data link layer header carrying the second parameter. Optionally, the RAN may carry the second parameter in a perception layer header and send the perception layer header to the UE.

S302b: The UE-DLL sends the second parameter to the UE-TLL. Correspondingly, the UE-TLL receives the second parameter from the UE-DLL.

After obtaining the data link layer header carrying the second parameter, the UE-DLL may extract the second parameter from the data link layer header. Then, the terminal device may carry the second parameter extracted by the UE-DLL in a perception layer header, and send the perception layer header carrying the second parameter to the UE-TLL. After receiving the perception layer header, the UE-TLL may obtain the second parameter from the perception layer header.

In Manner 1, the RAN carries the second parameter in the data link layer header, and sends the data link layer header to the terminal device; and the UE-DLL extracts the second parameter from the data link layer header, then carries the second parameter in the perception layer header, and sends the perception layer header to the UE-TLL. In this manner, the terminal device instead of the access network device carries the second parameter in the perception layer header, so that the access network device may not modify a header above the network layer.

Manner 2: The RAN indirectly sends the second parameter to the terminal device.

The RAN may send the second parameter to the core network device, so that the core network device carries the second parameter in a perception layer header of a downlink data packet, and then sends the downlink data packet of the perception layer header carrying the second parameter to the terminal device via the access network device. For example, the access network device may specifically carry the second parameter in a GTP-U header, and send the GTP-U header to the core network device. In other words, the access network device may include, in the uplink data packet corresponding to the first service flow, the GTP-U header carrying the second parameter. After obtaining the GTP-U header, the core network device may extract the second parameter from the GTP-U header. The core network device may carry the second parameter in the perception layer header, and send the perception layer header carrying the second parameter to the access network device. Then, the access network device sends the perception layer header carrying the second parameter to the terminal device.

In Manner 2, the RAN carries the second parameter in the GTP-U header, and sends the GTP-U header to the core network device. The core network device extracts the second parameter from the GTP-U header, carries the second parameter in the perception layer header, and sends the perception layer header to the access network device. Finally, the access network device sends the perception layer header to the terminal device. In this manner, the core network device instead of the access network device carries the second parameter in the perception layer header, so that the access network device may not modify a header above the network layer.

S302c: The UE-TLL adjusts, based on the second parameter, a transmission policy of an uplink data packet corresponding to the first service flow.

In an implementation scenario, when the second parameter includes the reference transmission rate, the second information may be used to request the reference transmission rate. The UE-TLL may adjust, based on the reference transmission rate, the transmission policy of the uplink data packet corresponding to the first service flow. Specifically, the reference transmission rate may indicate a maximum transmission rate that can be provided by the RAN for the terminal device, or may indicate a maximum transmission that can be provided by the RAN for the first service flow. The UE-TLL may adjust a value of a congestion window based on the reference transmission rate when starting congestion control on the first service flow. For example, it is assumed that the reference transmission rate is 500 Mbps. When setting the congestion window, the UE-TLL may not need to start probing from a small value (for example, 1 Mbps), and may use a large value (for example, 250 Mbps) of the congestion window. This helps shorten the time consumed by a probing mechanism and increase bandwidth utilization.

In another implementation scenario, when the second parameter includes the predicted transmission rate, the second information may be used to request the predicted transmission rate. The UE-TLL may adjust, based on the predicted transmission rate, the transmission policy of the uplink data packet corresponding to the first service flow. Specifically, the predicted transmission rate may indicate a maximum transmission rate that can be provided by the RAN for the first service flow at a prediction moment. The UE-TLL may adjust application layer coding of the first service flow based on the predicted transmission rate, for example, adjust a service frame rate or resolution. For example, it is assumed that a current rate of 100 Mbps for the first service flow supports sending at resolution of 2K, and the predicted transmission rate indicates that the maximum transmission rate that can provided by the RAN for the first service flow changes to 20 Mbps after 2 seconds. In this case, the UE-TLL can reduce the resolution to 1080p in advance, thereby improving data transmission stability.

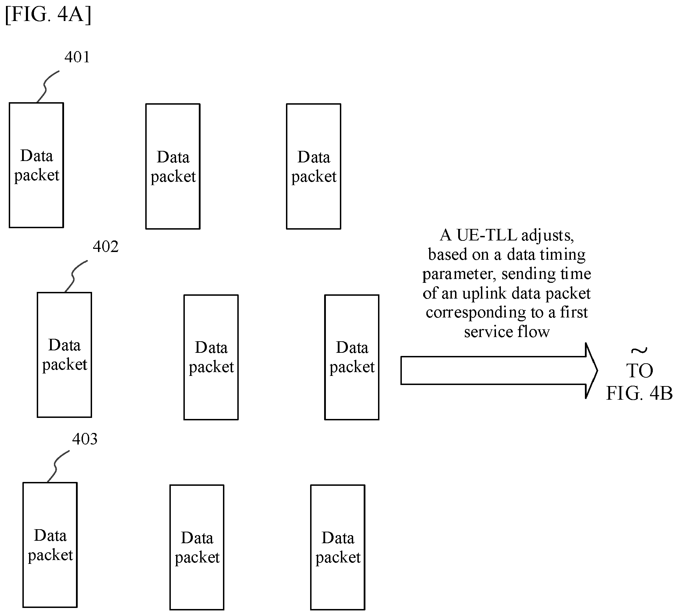

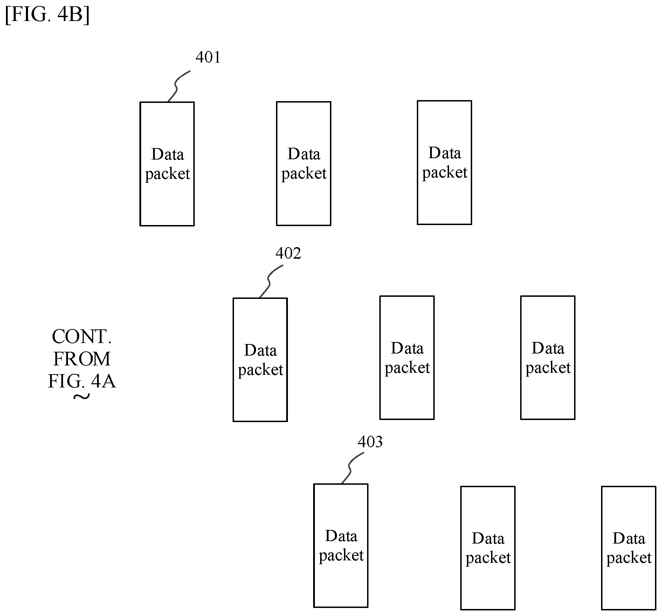

In another implementation scenario, when the second parameter includes the data timing parameter, the second information may be used to request the data timing parameter. The UE-TLL may adjust, based on the data timing parameter, the transmission policy of the uplink data packet corresponding to the first service flow. Specifically, the data timing parameter may indicate time at which the RAN expects the UE-TLL to send a data packet. The UE-TLL may adjust, based on the data timing parameter, a sending time of the uplink data packet corresponding to the first service flow. For a periodic service, the RAN indicates, to the UE-TLL, time at which a data packet is expected to be sent, so that time at which data packets arrive at the RAN is not excessively close to each other. When a PDB requirement is tight, a case in which the access network device needs to schedule a large quantity of data packets in a short period of time is avoided. For example, FIG. 4A and FIG. 4B are a diagram of sending a data packet by the UE-TLL according to this embodiment of this application. As shown in FIG. 4A, the UE-TLL sends a data packet 401, a data packet 402, and a data packet 403 in a periodic service at close time. In the case shown in FIG. 4A, the data packet 401, the data packet 402, and the data packet 403 also arrive at the RAN at close time. If PDB requirements of the data packet 401, the data packet 402, and the data packet 403 are tight, it means that the access network device needs to send all the data packets in a short period of time, which increases scheduling pressure of the access network device. As shown in FIG. 4B, the UE-TLL may discretely send the data packet 401, the data packet 402, and the data packet 403 based on a data timing parameter provided by the RAN. In the case shown in FIG. 4B, the data packet 401, the data packet 402, and the data packet 403 arrive at the RAN at more dispersed time. This helps relieve scheduling pressure of the access network device.

In some embodiments, the third data link layer header may carry the fourth parameter, and the RAN may adjust, based on the fourth parameter, a transmission policy of an uplink data packet corresponding to the first service flow.

S302d: The RAN adjusts, based on the fourth parameter, the transmission policy of the uplink data packet corresponding to the first service flow.

In some embodiments, before performing step S302b, the RAN may send third control information to the terminal device, where the third control information may be used to request the terminal device to provide the fourth parameter. The fourth parameter may be used by the RAN to optimize data transmission. The fourth parameter may include the data packet service attribute information. A manner in which the RAN sends the third control information to the terminal device is similar to the manner in which the RAN sends the second parameter to the terminal device, and may include a direct sending manner and an indirect sending manner. The direct sending manner includes: The RAN carries the third control information in a data link layer header, and sends the data link layer header to the terminal device; and the UE-DLL extracts the third control information from the data link layer header, then carries the third control information in a perception layer header, and sends the perception layer header to the UE-TLL. The indirect sending manner includes: The RAN sends the third control information to the core network device; the core network device carries the third control information in a perception layer header, and then sends the perception layer header carrying the third control information to the RAN; and finally, the RAN sends a downlink data packet of the perception layer header carrying the third control information to the terminal device.

In an implementation scenario, when the fourth parameter includes the data sequence parameter, the third control information may be used to request the data sequence parameter. The RAN may adjust, based on the data sequence parameter, the transmission policy of the uplink data packet corresponding to the first service flow. Specifically, the data sequence parameter may be used to identify data packets in different groups. A data packet in one group usually corresponds to a complete application function. For example, all data packets corresponding to an image may be grouped into a group A, all data packets corresponding to an AI model may be grouped into a group B, all data packets corresponding to a file may be grouped into a group C, and all data packets corresponding to a three-dimensional (3D) object model may be grouped into a group D. Optionally, data packets in a same group may use a same identifier as a data sequence parameter. For example, all data packets corresponding to an image A1 may use an identifier 1 as a data sequence parameter, all data packets corresponding to an image A2 may use an identifier 2 as a data sequence parameter, and all data packets corresponding to a file C1 may use an identifier 3 as a data sequence parameter. In this case, the RAN may determine, based on a data sequence parameter of each data packet, a group to which the data packet belongs, to perform refined management on uplink transmission time of data packets in a same group. Optionally, for data packets in a same group, identifiers of data packets at a start location and an end location may also be used as a data sequence parameter. For example, a data packet a at a start location corresponding to the image A1 may use an identifier a1 as a data sequence parameter, and a data packet b at an end location corresponding to the image A1 may use an identifier b1 as a data sequence parameter; and a data packet c at a start location corresponding to the image A2 may use an identifier c2 as a data sequence parameter, and a data packet d at an end location corresponding to the image A2 may use an identifier d2 as a data sequence parameter. In this case, the RAN may determine, based on a data sequence parameter of a data packet at a start location and a data sequence parameter of a data packet at an end location in a same group, whether transmission of data packets belonging to the same group is completed, to perform refined management on uplink transmission time of the data packets belonging to the same group.

In another implementation scenario, when the fourth parameter includes the data invalidation parameter, the third control information may be used to request the data invalidation parameter. The RAN may adjust, based on the data invalidation parameter, the transmission policy of the uplink data packet corresponding to the first service flow. Specifically, the data invalidation parameter may be used to identify an invalid data packet in data packets in a same group. The RAN may stop, based on the data invalidation parameter, transmitting an invalid data packet to the server, to save transmission resources and reduce a transmission delay of another valid data packet.

In another implementation scenario, when the fourth parameter includes the data importance level parameter, the third control information may be used to request the data importance level parameter. The RAN may adjust, based on the data importance level parameter, the transmission policy of the uplink data packet corresponding to the first service flow. For example, when transmitting a data packet with a high importance level, the RAN may transmit the data packet with a small PDB, to improve transmission reliability of the data packet with the high importance level.

S303: The RAN sends a third uplink data packet to the CN. Correspondingly, the CN receives the third uplink data packet from the RAN. The third uplink data packet includes seventh control information and/or a fifth transmission parameter.

For the seventh control information, the seventh control information may be used to request a sixth transmission parameter, and the sixth transmission parameter may be used by the RAN to optimize data transmission. Therefore, the sixth transmission parameter may be understood as a parameter provided by the TLL (for example, the UE-TLL and/or a server-TLL) for the RAN-DLL. Specifically, the sixth transmission parameter may include the data packet service attribute information.

The TLL may be the UE-TLL and/or the server-TLL. Descriptions are separately provided in Scenario A and Scenario B.

Scenario A: The RAN requests the sixth transmission parameter from the UE-TLL. To distinguish from Scenario B, in this scenario, the sixth transmission parameter is described as a fifth parameter, and the seventh control information in this scenario is described as third information. The fifth parameter may be understood as a parameter provided by the UE-TLL for the RAN-DLL. The fifth parameter may be used by the RAN to optimize data transmission. The fifth parameter may include the data packet service attribute information. In other words, the access network device may carry the third information in the third uplink data packet, for example, may carry the third information in a GTP-U header, and then carry, via the core network device, the third information in a perception layer header of the downlink data packet corresponding to the first service flow, so that the terminal device can obtain the third information from the perception layer header of the downlink data packet corresponding to the first service flow, and further control the UE-TLL to provide the fifth parameter for the RAN-DLL. For details, refer to 303a to 303c.

S303a: The CN sends the third information to the UE. Correspondingly, the UE receives the third information from the CN.

The CN can carry the third information in the fifth perception layer header, so that the core network device can send the fifth perception layer header to the terminal device via the access network device. Optionally, the core network device may carry the third information in the perception layer header of the downlink data packet corresponding to the first service flow.

S303b: A UE-perception layer sends the third information to the UE-TLL. Correspondingly, the UE-TLL receives the third information from the UE-perception layer.

The UE-perception layer may parse the perception layer header of the downlink data packet to obtain the third information, and then send the third information to the UE-TLL.

S303c: The UE-TLL generates the fifth parameter based on the third information.

After the UE-TLL generates the fifth parameter, the UE-TLL may send the fifth parameter to the UE-perception layer. After receiving the fifth parameter, the UE-perception layer may carry the fifth parameter in a perception layer header, and then send the perception layer header carrying the fifth parameter to the UE-DLL. After receiving the perception layer header carrying the fifth parameter, the UE-DLL may obtain the fifth parameter from the perception layer header, carry the fifth parameter in a data link layer header, and send the data link layer header to the RAN.

Scenario B: The RAN requests the sixth transmission parameter from the server-TLL. To distinguish from Scenario A, in this scenario, the sixth transmission parameter is described as a sixth parameter, and the seventh control information in this scenario is described as fourth information. The sixth parameter may be understood as a parameter provided by the server-TLL for the RAN-DLL. The sixth parameter may include the data packet service attribute information. The sixth parameter may be used by the RAN to optimize data transmission. In other words, the access network device may carry the fourth information in the third uplink data packet, and then carry, via the core network device, the fourth information in a perception layer header of the uplink data packet corresponding to the first service flow, so that the server can obtain the fourth information from the perception layer header of the uplink data packet corresponding to the first service flow, and further control the server-TLL to provide the fifth parameter for the RAN.

For the fifth transmission parameter, the fifth transmission parameter may be used by the TLL to optimize data transmission. Therefore, the fifth transmission parameter may also be understood as a parameter provided by the RAN-DLL to the TLL (for example, the UE-TLL and/or the server-TLL). The fifth transmission parameter may include a transmission parameter of a data link.

The TLL may be the UE-TLL and/or the server-TLL. Descriptions are separately provided in Scenario C and Scenario D.

Scenario C: The RAN provides the fifth transmission parameter for the UE-TLL. To distinguish from Scenario D, in this scenario, the fifth transmission parameter is described as a seventh parameter, and the seventh parameter may be understood as a parameter provided by the RAN-DLL for the UE-TLL. The seventh parameter may be used by the TLL to optimize data transmission. The seventh parameter may include a transmission parameter of a data link. For details, refer to S303d to S303f.

S303d: The CN sends the seventh parameter to the UE. Correspondingly, the UE receives the seventh parameter from the CN.

The CN can carry the seventh parameter in the eighth perception layer header, so that the core network device can send the eighth perception layer header to the terminal device via the access network device. Optionally, the core network device may carry the seventh parameter in the perception layer header of the downlink data packet corresponding to the first service flow.

S303e: The UE-perception layer sends the seventh parameter to the UE-TLL. Correspondingly, the UE-TLL receives the seventh parameter from the UE-perception layer.

S303f: The UE-TLL adjusts, based on the seventh parameter, a transmission policy of an uplink data packet corresponding to the first service flow.

Scenario D: The RAN provides the fifth transmission parameter for the server-TLL. To distinguish from Scenario C, in this scenario, the fifth transmission parameter is described as an eighth parameter, and the eighth parameter may be understood as a parameter provided by the RAN-DLL for the server-TLL. The eighth parameter may be used by the TLL to optimize data transmission. The eighth parameter may include a transmission parameter of a data link. In other words, the access network device may carry the eighth parameter in the third uplink data packet, and then carry, via the core network device, the eighth parameter in the perception layer header of the uplink data packet corresponding to the first service flow, so that the server may obtain the eighth parameter from the perception layer header of the uplink data packet corresponding to the first service flow, and the server may adjust, based on the eighth parameter, a transmission policy of a downlink data packet corresponding to the first service flow.

S304: The CN sends a fourth uplink data packet to the server. Correspondingly, the server receives the fourth uplink data packet from the CN. The fourth uplink data packet includes a ninth perception layer header, and the ninth perception layer header carries the fourth information and/or the eighth parameter.

S304 is a procedure for Scenario B and Scenario D. Specifically, after the CN receives the third uplink data packet from the RAN, the CN learns of the fourth information and/or the eighth parameter, and the CN may send these parameters to the server. The CN may perform some processing on the first uplink data packet before sending the first uplink data packet to the server, or when the CN learns of the fourth information and/or the eighth parameter and a new data packet needs to be sent, the CN places the fourth information and/or the eighth parameter in the new data packet and sends the new data packet to the server. Therefore, the fourth uplink data packet is introduced as an uplink data packet sent by the CN to the server.

In some embodiments, the ninth perception layer header carries the fourth information. For details, refer to S304a to 304c.

S304a: The server sends the sixth parameter to the CN based on the fourth information. Correspondingly, the CN receives the sixth parameter.

The server may generate the sixth parameter based on the fourth information. After generating the sixth parameter, the server may carry the sixth parameter in a perception layer header, and then send the perception layer header carrying the sixth parameter to the CN.

S304b: The CN sends the sixth parameter to the RAN. Correspondingly, the RAN receives the sixth parameter from the CN.

The CN may receive the perception layer header carrying the sixth parameter, obtain the sixth parameter from the perception layer header, and then send the sixth parameter to the RAN.

S304c: The RAN adjusts, based on the sixth parameter, a transmission policy of a downlink data packet corresponding to the first service flow.

In an implementation scenario, when the sixth parameter includes the data delay parameter, the RAN may adjust, based on the data delay parameter, the transmission policy of the downlink data packet corresponding to the first service flow. Specifically, the data delay parameter may indicate the PDB of the first data packet, or may indicate the PDB offset of the first data packet, where the first data packet is the data packet corresponding to the first service flow. The RAN may determine the PDB of the data packet based on the data delay parameter. Further, the RAN may schedule the data packet based on the determined PDB of the data packet. For example, it is assumed that the data delay parameter indicates that the PDB offset of the first data packet is 4 ms, and a reference PDB of the data packet corresponding to the first service flow is 10 ms. In this case, the RAN may determine that the PDB of the first data packet is 14 ms. Further, the RAN may schedule the first data packet based on 14 ms, that is, the RAN may send the first data packet within 14 ms. This can relieve scheduling pressure of the access network device compared with a case in which the RAN schedules the first data packet based on 10 ms. In this manner, when transmitting different data packets, the server may dynamically indicate PDBs of the different data packets to the access network device. This helps improve data transmission flexibility.

In another implementation scenario, when the sixth parameter includes the data sequence parameter, the RAN may adjust, based on the data sequence parameter, the transmission policy of the downlink data packet corresponding to the first service flow. The RAN may determine, based on the data sequence parameter, whether transmission of data packets belonging to a same group is completed, to perform refined management on downlink transmission time of the data packets belonging to the same group.

In another implementation scenario, when the sixth parameter includes the data invalidation parameter, the RAN may adjust, based on the data invalidation parameter, the transmission policy of the downlink data packet corresponding to the first service flow. The RAN may stop, based on the data invalidation parameter, transmitting an invalid data packet to the terminal device, to save transmission resources and reduce a transmission delay of another valid data packet.

In another implementation scenario, when the sixth parameter includes the data importance level parameter, the RAN may adjust, based on the data importance level parameter, the transmission policy of the downlink data packet corresponding to the first service flow. For example, when transmitting a data packet with a high importance level, the RAN may transmit the data packet with a small PDB, to improve transmission reliability of the data packet with the high importance level.

In some embodiments, the ninth perception layer header may carry the eighth parameter. For details, refer to 304d.

S304d: The server adjusts, based on the eighth parameter, a transmission policy of a downlink data packet corresponding to the first service flow.

In some embodiments, the server may send eighth control information to the access network device, where the eighth control information may be used to request the access network device to provide the eighth parameter. A manner in which the server sends the eighth control information to the access network device may include: The server carries the eighth control information in a perception layer header, and sends the perception layer header carrying the eighth control information to the CN. The CN obtains the eighth control information from the perception layer header, and sends the eighth control information to the RAN.

In an implementation scenario, when the eighth parameter includes the reference transmission rate, the eighth control information may be used to request the reference transmission rate. The server may adjust, based on the reference transmission rate, the transmission policy of the downlink data packet corresponding to the first service flow. For example, the server may adjust the value of the congestion window based on the reference transmission rate when starting congestion control on the first service flow, to avoid probing from an excessively small value of the congestion window.

In another implementation scenario, when the eighth parameter includes the predicted transmission rate, the eighth control information may be used to request the predicted transmission rate. The server may adjust, based on the predicted transmission rate, a downlink transmission policy of a data packet corresponding to the first service flow. Specifically, the predicted transmission rate may indicate a maximum transmission rate that can be provided by the RAN for the first service flow at a prediction moment. The server may adjust application layer coding of the first service flow based on the predicted transmission rate, for example, adjust a service frame rate or resolution. In this manner, the server may reduce the service frame rate or the resolution in advance before a transmission rate corresponding to the first service flow is reduced, to avoid frame freezing during playing.

In still another implementation scenario, when the eighth parameter includes a server-data timing parameter, the eighth control information may be used to request the server-data timing parameter. The server may adjust, based on the server-data timing parameter, the transmission policy of the downlink data packet corresponding to the first service flow. Specifically, the server-data timing parameter may indicate time at which the RAN expects the server to send a data packet. The server may adjust, based on the server-data timing parameter, sending time of the downlink data packet corresponding to the first service flow. For a periodic service, the RAN indicates, to the server, time at which a data packet is expected to be sent, so that time at which data packets arrive at the RAN is not excessively close to each other. When a PDB requirement is tight, a case in which the access network device needs to schedule a large quantity of data packets in a short period of time is avoided.

In the embodiment shown in FIG. 3A to FIG. 3D, the perception layer is introduced, so that different protocol layers can interact with each other more efficiently based on the perception layer. In addition, this solution is universal. This helps improve data transmission efficiency and enhance data transmission performance.

It should be noted that the scenarios in embodiments of this application may be separately presented, or may be presented in combination. For example, Scenario 1 to Scenario 4 may be randomly combined, and Scenario A to Scenario D may be randomly combined. For different scenarios, the control information and the transmission parameters may be presented in different forms. For example, for Scenario 1, the first control information may be the first information; for Scenario 2, the first control information may be the second information; and for a case in which Scenario 1 and Scenario 2 are combined, the first control information may include the first information and the second information. For another example, for Scenario C, the fifth transmission parameter may be the seventh parameter; for Scenario D, the fifth transmission parameter may be the eighth parameter; and for a case in which Scenario C and Scenario D are combined, the fifth transmission parameter may include the seventh parameter and the eighth parameter. It may be understood that different descriptions of the control information and the transmission parameters are introduced to distinguish between the control information and the transmission parameters in different scenarios, and do not constitute a limitation on this application.

FIG. 3A to FIG. 3D describe embodiments of this application from a perspective of sending an uplink data packet by the terminal device to the server. The following describes embodiments of this application from a perspective of sending a downlink data packet by the server to the terminal device.

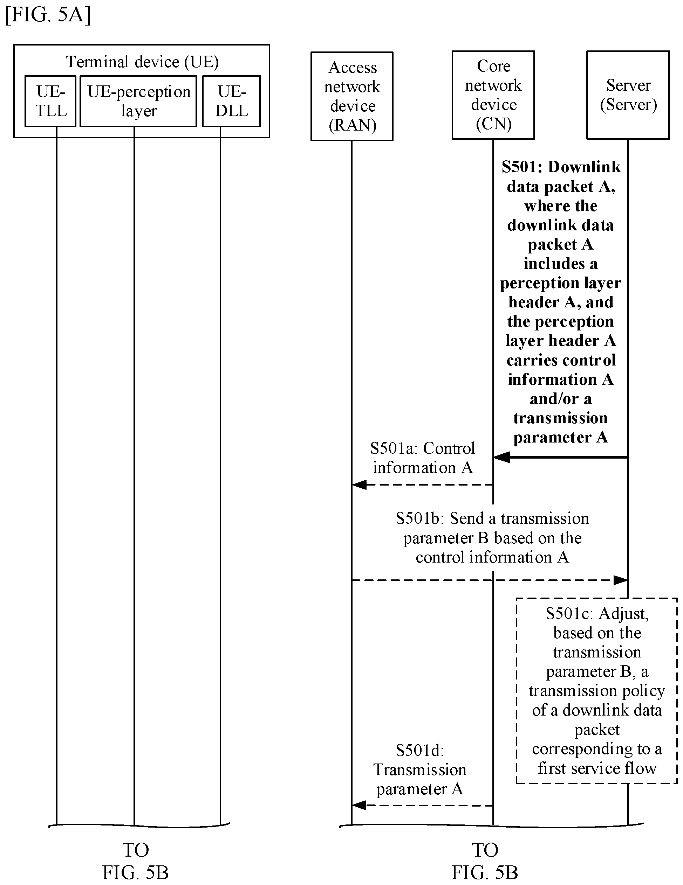

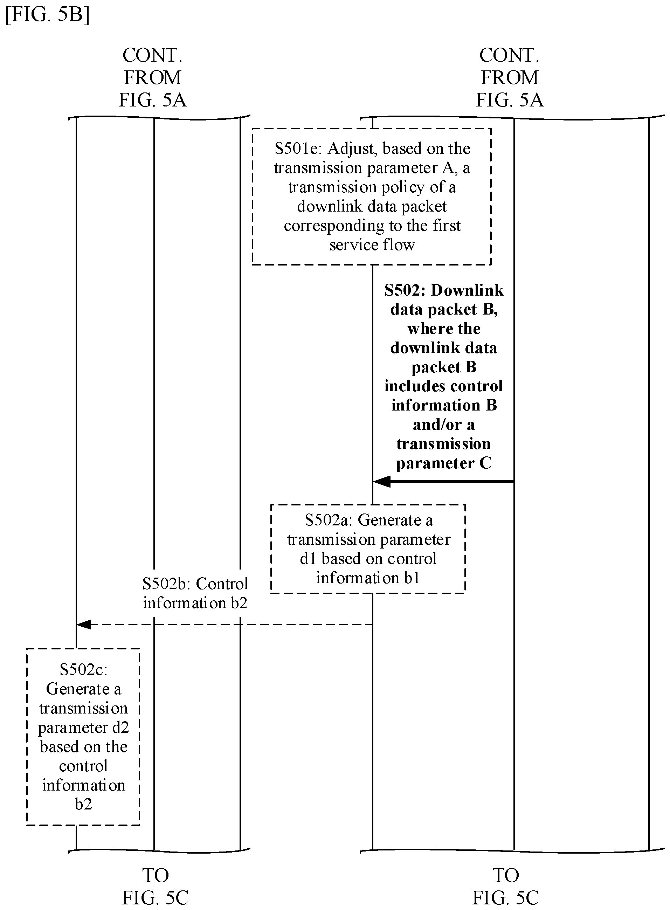

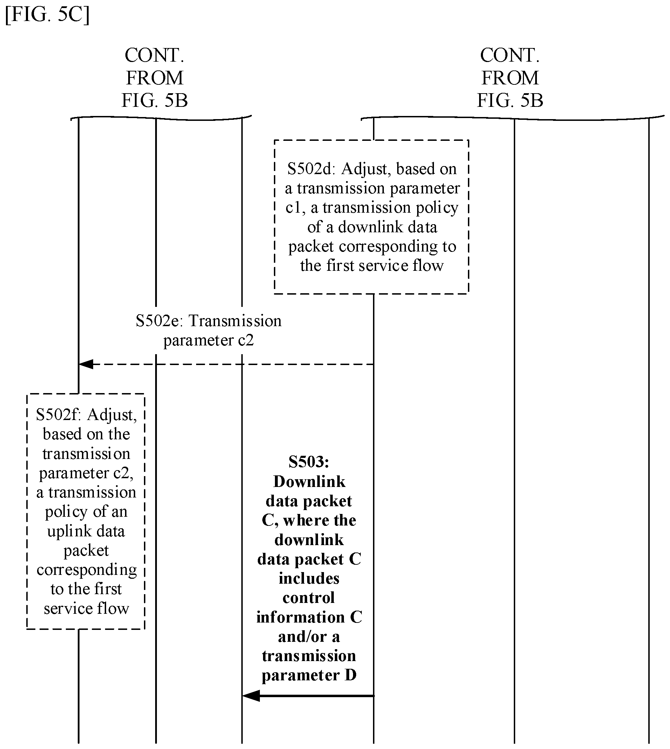

FIG. 5A to FIG. 5C are a schematic flowchart of another communication method according to an embodiment of this application. In FIG. 5A to FIG. 5C, downlink transmission is used as an example. The method may include but is not limited to the following steps.

S501: A server sends a downlink data packet A to a CN. Correspondingly, the CN receives the downlink data packet A from the server. The downlink data packet A includes a perception layer header A, and the perception layer header A includes control information A and/or a transmission parameter A.

The control information A may be used to request a transmission parameter B, and the transmission parameter B may be understood as a parameter provided by a RAN-DLL for a server-TLL. The transmission parameter B may be used by the TLL to optimize data transmission, and the transmission parameter B may include a transmission parameter of a data link.

In some embodiments, the perception layer header A may carry the control information A, and the CN obtains the control information A from the perception layer header A, and then sends the control information A to a RAN. For details, refer to S501a to S501c.

S501a: The CN sends the control information A to the RAN. Correspondingly, the RAN receives the control information A from the CN.

For example, the CN may carry the control information A in a GTP-U header, and then send the GTP-U header carrying the control information A to the RAN. The RAN may obtain the control information A from the GTP-U header.

S501b: The RAN sends the transmission parameter B to the server based on the control information A. Correspondingly, the server receives the transmission parameter B from the RAN.

The RAN may generate the transmission parameter B based on the control information A. After generating the transmission parameter B, the RAN may send the transmission parameter B to the CN. The CN may carry the transmission parameter B in a perception layer header, and then send the perception layer header carrying the transmission parameter B to the server. After receiving the perception layer header carrying the transmission parameter B, the server may obtain the transmission parameter B from the perception layer header.

S501c: The server adjusts, based on the transmission parameter B, a transmission policy of a downlink data packet corresponding to a first service flow.

An implementation principle and process of step S501c are similar to those of step S304d. Details are not described herein again.

In some embodiments, the perception layer header A may carry the transmission parameter A, and the transmission parameter A may be understood as a parameter provided by the server-TLL for the RAN-DLL. The transmission parameter A may be used by the RAN to optimize data transmission. The transmission parameter A may include data service packet attribute information. The CN may obtain the transmission parameter A from the perception layer header A, and then send the transmission parameter A to the RAN. For details, refer to S501d and S501e.

S501d: The CN sends the transmission parameter A to the RAN. Correspondingly, the RAN receives the transmission parameter A from the CN.

An implementation principle of step S501d is similar to that of step S501a. Details are not described herein again.

S501e: The RAN adjusts, based on the transmission parameter A, a transmission policy of a downlink data packet corresponding to the first service flow.

Herein, an implementation principle and process of step S501e are similar to those of step S304c. Details are not described herein again.

S502: The CN sends a downlink data packet B to the RAN. Correspondingly, the RAN receives the downlink data packet B from the CN. The downlink data packet B includes control information B and/or a transmission parameter C.

For the control information B, the control information B may be used to request a transmission parameter d1 and/or a transmission parameter d2. The transmission parameter d1 may be understood as a parameter provided by the RAN-DLL for the server-TLL. The transmission parameter d1 may be used by the TLL to optimize transmission. The transmission parameter d1 may include a transmission parameter of a data link. The transmission parameter d2 may be understood as a parameter provided by a UE-TLL for the RAN-DLL. The transmission parameter d2 may be used by the RAN to optimize data transmission. The transmission parameter d2 may include the data packet service attribute information. Because the control information B may be used to request the transmission parameter d1 and/or the transmission parameter d2, descriptions are separately provided in Scenario 1 and Scenario 2.

Scenario 1: The control information B is used to request the transmission parameter d1. To distinguish from Scenario 2, in this scenario, the control information B is described as control information b1. For details, refer to S502a.

S502a: The RAN generates the transmission parameter d1 based on the control information b1.

After receiving the control information b1, the RAN may generate the transmission parameter d1 based on the control information b1. Next, the RAN may carry the transmission parameter d1 in a perception layer header via the core network device, and then send the perception layer header carrying the transmission parameter d1 to the server.

Scenario 2: The control information B is used to request the transmission parameter d2. To distinguish from Scenario 1, in this scenario, the control information B is described as control information b2. For details, refer to S502b and S502c.

S502b: The RAN sends the control information b2 to UE. Correspondingly, the UE receives the control information b2 from the RAN.

The CN may carry the control information b2 in a perception layer header, and send the perception layer header carrying the control information b2 to the RAN. Then, the RAN may send the perception layer header carrying the control information b2 to the UE. Next, a UE-perception layer may obtain the control information b2 from the perception layer header, and then send the information b2 to the UE-TLL. Optionally, the RAN may alternatively carry the control information b2 in the perception layer header, and send the perception layer header carrying the control information b2 to the UE.

S502c: The UE-TLL generates the transmission parameter d2 based on the control information b2.

After receiving the control information b2, the UE-TLL may generate the transmission parameter d2 based on the control information b2. Herein, the transmission parameter d2 may be carried in a data link layer header of an uplink data packet corresponding to the first service flow, and sent to the access network device.

For the transmission parameter C, the transmission parameter C may include a transmission parameter c1 and/or a transmission parameter c2. The transmission parameter c1 may be understood as a parameter provided by the server-TLL for the RAN-DLL. The transmission parameter c1 may be used by the RAN to optimize data transmission. The transmission parameter c1 may include the data packet service attribute information. The transmission parameter c2 may be understood as a parameter provided by the RAN-DLL for the UE-TLL. The transmission parameter c2 may be used by the TLL to optimize data transmission. The transmission parameter c2 may include a transmission parameter of a data link. Because the transmission parameter C may include the transmission parameter c1 and/or the transmission parameter c2, descriptions are separately provided in Scenario 3 and Scenario 4.

Scenario 3: The transmission parameter C includes the transmission parameter c1. For details, refer to step S502d.

S502d: The RAN adjusts, based on the transmission parameter c1, a transmission policy of a downlink data packet corresponding to the first service flow.

Herein, an implementation principle and process of step S502d are similar to those of step S304c. Details are not described herein again.

Scenario 4: The transmission parameter C includes the transmission parameter c2. For details, refer to steps S502e and S502f.

S502e: The RAN sends the transmission parameter c2 to the UE. Correspondingly, the UE receives the transmission parameter c2 from the RAN.

The CN may carry the transmission parameter c2 in a perception layer header, and send the perception layer header carrying the transmission parameter c2 to the RAN. Then, the RAN may send the perception layer header carrying the transmission parameter c2 to the UE-perception layer. Next, the UE-perception layer may obtain the transmission parameter c2 from the perception layer header, and then send the transmission parameter c2 to the UE-TLL. Optionally, the RAN may alternatively carry the transmission parameter c2 in a perception layer header, and send the perception layer header carrying the transmission parameter c2 to the UE.

S502f: The UE-TLL adjusts, based on the transmission parameter c2, a transmission policy of an uplink data packet corresponding to the first service flow.

Herein, an implementation principle and process of step S502f are similar to those of step S302c. Details are not described herein again.

S503: The RAN sends a downlink data packet C to the UE. Correspondingly, the UE receives the downlink data packet C from the RAN. The downlink data packet C includes control information C and/or a transmission parameter D.

The control information C may be used to request a transmission parameter E, and the transmission parameter E may be understood as a parameter provided by the UE-TLL for the RAN-DLL. The transmission parameter E may be used by the RAN to optimize data transmission. The transmission parameter E may include the data packet service attribute information. The transmission parameter D may be understood as a parameter provided by the RAN-DLL for the UE-TLL. The transmission parameter D may be used by the TLL to optimize transmission. The transmission parameter D may include a transmission parameter of a data link.

In some embodiments, the downlink data packet C may include a perception layer header, and the perception layer header may include the control information C and/or the transmission parameter D. In this case, the RAN may first send the control information C and/or the transmission parameter D to the CN; and the CN carries the control information C and/or the transmission parameter D in a perception layer header, and then sends the perception layer header carrying the control information C and/or the transmission parameter D to the RAN.

In some embodiments, the downlink data packet C may include a data link layer header, and the data link layer header may include the control information C and/or the transmission parameter D. In this case, the RAN may carry the control information C and/or the transmission parameter D in the data link layer header, and then send the data link layer header carrying the control information C and/or the transmission parameter D to the UE-DLL.

Optionally, the RAN may alternatively carry the control information C and/or the transmission parameter D in a perception layer header, and then send the perception layer header carrying the control information C and/or the transmission parameter D to the UE-DLL.

In the embodiment shown in FIG. 5A to FIG. 5C, the perception layer is introduced, so that different protocol layers can interact with each other more efficiently based on the perception layer. In addition, this solution is universal. This helps improve data transmission efficiency and enhance data transmission performance.

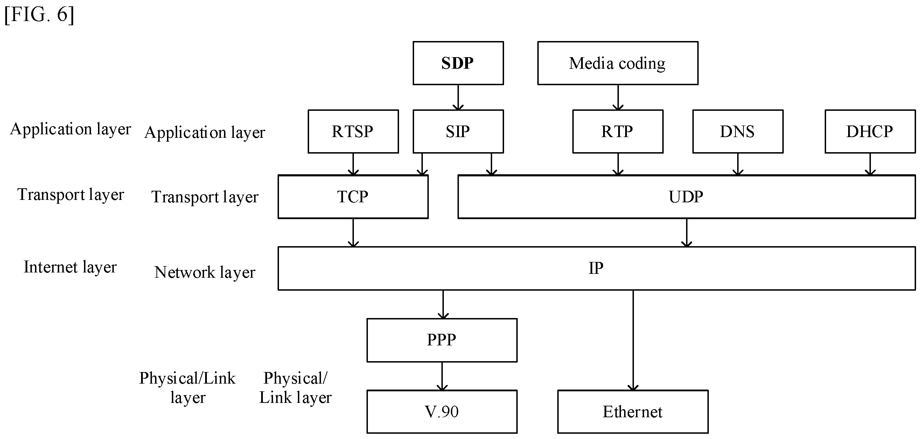

In this embodiment of this application, the foregoing protocol layer interaction mechanism based on the perception layer may be triggered according to a session description protocol (session description protocol, SDP). The SDP is an application layer control protocol used to describe a multimedia session, is a text-based protocol, and can be used for negotiation of a media type and a coding scheme during session establishment. For example, FIG. 6 is a diagram of a location of the SDP protocol in a protocol stack according to this embodiment of this application. In an implementation, the terminal device, the core network device, and the server may negotiate according to the SDP protocol, to trigger a perception layer protocol. For example, the terminal device may request, according to the SDP protocol, the server to trigger the perception layer protocol. After the server determines to trigger the perception layer protocol, the terminal device, the core network device, and the server may perform interaction between different protocol layers based on the perception layer.

It should be noted that, in embodiments of this application, a protocol layer A sending a header A to a protocol layer B may be understood as the protocol layer A sending a data packet including the header A to the protocol layer B. The data packets in embodiments of this application may be data packets associated with a same service flow. In addition, in embodiments of this application, the control information sent by the DLL to the TLL may also be described as D2T control information, and may be specifically classified into uplink D2T control information and downlink D2T control information. For example, the control information sent by the RAN-DLL to the server-TLL may be described as uplink D2T control information, and the control information sent by the RAN-DLL to the UE-TLL may be described as downlink D2T control information. The transmission parameters sent by the DLL to the TLL may also be described as D2T transmission parameters, and may be specifically classified into an uplink D2T transmission parameter and a downlink D2T transmission parameter. Similarly, the control information sent by the TLL to the DLL may also be described as T2D control information, and may be specifically classified into uplink T2D control information and downlink T2D control information. For example, the control information sent by the UE-TLL to the RAN-DLL may be described as uplink T2D control information, and the control information sent by the server-TLL to the RAN-DLL may be described as downlink T2D control information. The transmission parameters sent by the TLL to the DLL may also be described as T2D transmission parameters, and may be specifically classified into an uplink T2D transmission parameter and a downlink T2D transmission parameter.

In addition, to implement embodiments of this application, an embodiment of this application further provides a general design of a perception layer header. The perception layer header may be carried in an uplink data packet or a downlink data packet. Table 1 shows an example of information carried in a perception layer header.

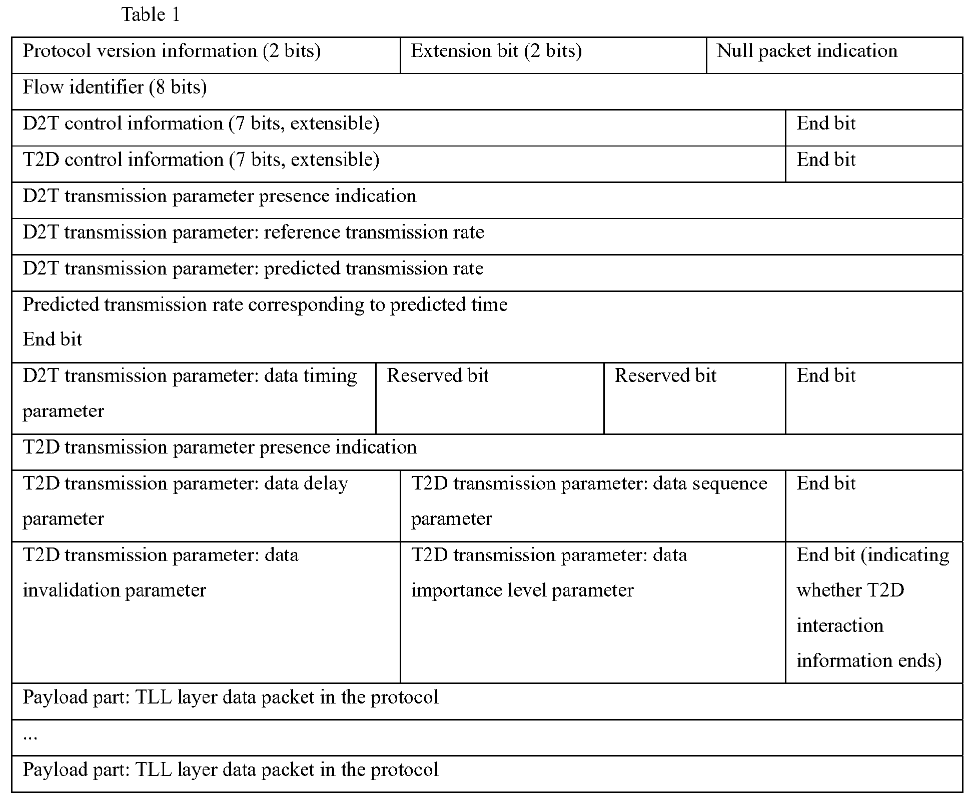

The "null packet indication" field may indicate that a subsequent data packet does not have a perception layer header. The "flow identifier" may be used to identify the first service flow. The "end bit" may indicate whether information ends. For example, if a value of the end bit in the D2T control information is 0, it may indicate that the D2T control information ends. If a value of the end bit of the D2T control information is 1, it may indicate that the D2T control information is still included in a next row. Each bit in the "D2T control information" field may indicate request enable/disable. For example, a first bit may indicate request enable/disable for a reference transmission rate. When a value of the first bit is 1, it may indicate that the D2T control information is used to request the reference transmission rate, that is, it is used to request to enable the reference transmission rate. When a value of the first bit is 0, it may indicate that the D2T control information is not used to request the reference transmission rate, that is, it is used to request to disable the reference transmission rate. The "D2T transmission parameter presence indication" field may indicate a present D2T transmission parameter, and may specifically include a field length and a field bitmap (bitmap). Each bit in the bitmap may indicate whether a D2T transmission parameter is present. The "D2T transmission parameter: reference transmission rate" field may indicate a reference transmission rate, and whether the parameter transmission rate is an uplink reference transmission rate or a downlink reference transmission rate may be determined based on whether the perception layer header is carried in an uplink data packet or a downlink data packet. The "T2D transmission parameter presence indication" field may indicate a present T2D transmission parameter, and may specifically include a field length and a bitmap. Each bit in the bitmap may indicate whether a T2D transmission parameter is present.

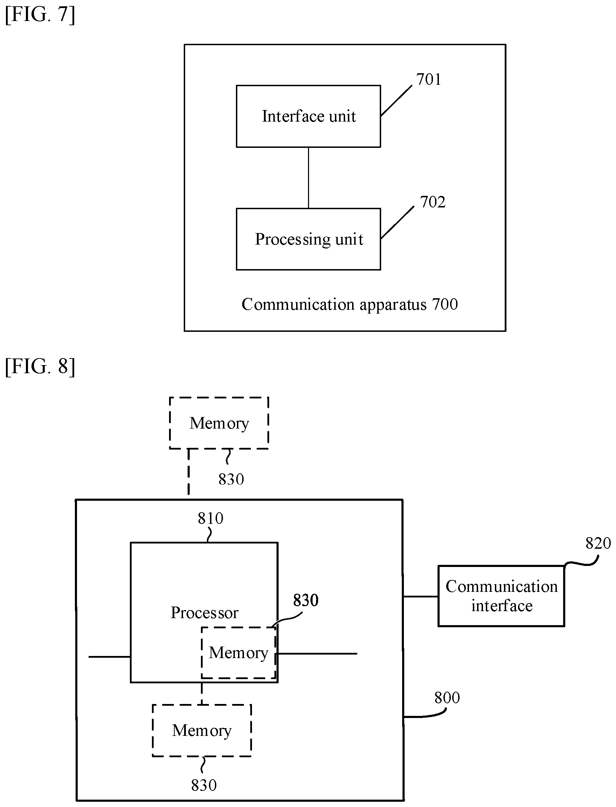

This application provides a communication apparatus, which may be configured to implement functions of the foregoing terminal device, access network device, core network device, or server. The communication apparatus may be a terminal device, an access network device, a core network device, or a server. The communication apparatus includes units that one-to-one correspond to methods/operations/steps/actions performed by the terminal device, the access network device, the core network device, or the server in the foregoing method embodiments. The units may be implemented by a hardware circuit, software, or a combination of a hardware circuit and software. FIG. 7 is a diagram of a structure of a communication apparatus 700 according to an embodiment of this application. The communication apparatus 700 may include an interface unit 701 and a processing unit 702. Specifically, the processing unit 702 is configured to process signaling and/or data, where the signaling and/or data may be data received by the interface unit 701, and the processed signaling and/or data may also be sent by the interface unit 701.

In an implementation, when the communication apparatus 700 is a terminal device,
the interface unit 701 is configured to receive a first uplink data packet, where the first uplink data packet includes a first perception layer header, the first perception layer header carries first control information and/or a first transmission parameter, the first control information is used to request a second transmission parameter, the first transmission parameter is a parameter provided by a first application layer for a first data link layer, the second transmission parameter is a parameter provided by a second data link layer for the first application layer, and the first uplink data packet is a data packet corresponding to a first service flow.

In this implementation, for specific implementations of the interface unit 701 and the processing unit 702, refer to specific implementation steps of the UE-DLL in FIG. 3A to FIG. 3D, and FIG. 5A to FIG. 5C. Details are not described herein again.

In another implementation, when the communication apparatus 700 is a terminal device,
the interface unit 701 is configured to send a first uplink data packet, where the first uplink data packet includes a first perception layer header, the first perception layer header carries first control information and/or a first transmission parameter, the first control information is used to request a second transmission parameter, the first transmission parameter is a parameter provided by a first application layer for a first data link layer, the second transmission parameter is a parameter provided by a second data link layer for the first application layer, and the first uplink data packet is a data packet corresponding to a first service flow.

In this implementation, for specific implementations of the interface unit 701 and the processing unit 702, refer to specific implementation steps of the UE-TLL in FIG. 3A to FIG. 3D, and FIG. 5A to FIG. 5C. Details are not described herein again.

In still another implementation, when the communication apparatus 700 is an access network device,
the interface unit 701 is configured to receive a second uplink data packet from a terminal device, where the second uplink data packet includes a third data link layer header, the third data link layer header carries second information and/or a fourth parameter, the second information is used to request a second parameter, the second parameter is a parameter provided by a data link layer of an access network device for a first application layer, the fourth parameter is a parameter provided by the first application layer for the data link layer of the access network device, and the second uplink data packet is a data packet corresponding to a first service flow.

In this implementation, for specific implementations of the interface unit 701 and the processing unit 702, refer to specific implementation steps of the access network device in FIG. 3A to FIG. 3D, and FIG. 5A to FIG. 5C. Details are not described herein again.

In yet another implementation, when the communication apparatus 700 is a core network device,
the interface unit 701 is configured to receive a third uplink data packet from an access network device, where the third uplink data packet includes seventh control information and/or a fifth transmission parameter, the seventh control information is used to request a sixth transmission parameter, the sixth transmission parameter is a parameter provided by a third application layer for a third data link layer, the fifth transmission parameter is a parameter provided by a fourth data link layer for a fourth application layer, and the third uplink data packet is a data packet corresponding to a first service flow.

In this implementation, for specific implementations of the interface unit 701 and the processing unit 702, refer to specific implementation steps of the core network device in FIG. 3A to FIG. 3D, and FIG. 5A to FIG. 5C. Details are not described herein again.

In still yet another implementation, when the communication apparatus 700 is a server,
the interface unit 701 is configured to receive a fourth uplink data packet from a core network device, where the fourth uplink data packet includes a ninth perception layer header, the ninth perception layer header carries fourth information and/or an eighth parameter, the fourth information is used to request a sixth parameter, the eighth parameter is a parameter provided by a data link layer of an access network device for a second application layer, the sixth parameter is a parameter provided by the second application layer for the data link layer of the access network device, and the fourth uplink data packet is a data packet corresponding to a first service flow.

In this implementation, for specific implementations of the interface unit 701 and the processing unit 702, refer to specific implementation steps of the server in FIG. 3A to FIG. 3D, and FIG. 5A to FIG. 5C. Details are not described herein again.

FIG. 8 shows a communication apparatus 800 according to an embodiment of this application, which is configured to implement functions of the foregoing terminal device, access network device, core network device, or server. The apparatus may be a communication device or an apparatus used in a communication device. The communication device may be a terminal device, an access network device, a core network device, or a server. The apparatus used in the communication device may be a chip system or a chip in the communication device. The chip system may include a chip, or may include a chip and another discrete device.

The communication apparatus 800 includes at least one processor 810, configured to implement a processing function of a device (for example, a terminal device, an access network device, a core network device, or a server) in the method provided in embodiments of this application. The communication apparatus 800 may further include a communication interface 820, configured to implement receiving and sending operations of a device (for example, a terminal device, an access network device, a core network device, or a server) in the method provided in embodiments of this application. In embodiments of this application, the communication interface may be a transceiver, a circuit, a bus, a module, or another type of communication interface, and is configured to communicate with another device through a transmission medium. For example, the communication interface 820 is used by an apparatus in the communication apparatus 800 to communicate with another device. The processor 810 receives and sends data through the communication interface 820, and is configured to implement the method described in the foregoing method embodiment.

The communication apparatus 800 may further include at least one memory 830, configured to store program instructions and/or data. The memory 830 is coupled to the processor 810. Coupling in embodiments of this application is indirect coupling or a communication connection between apparatuses, units, or modules, may be in an electrical form, a mechanical form, or another form, and is used for information exchange between the apparatuses, the units, or the modules. The processor 810 may cooperate with the memory 830. The processor 810 may execute the program instructions stored in the memory 830. At least one of the at least one memory may be included in the processor.

A specific connection medium between the communication interface 820, the processor 810, and the memory 830 is not limited in embodiments of this application. In this embodiment of this application, in FIG. 8, the memory 830, the processor 810, and the communication interface 820 are connected to each other through a bus. The bus is represented by a bold line in FIG. 8. A manner of a connection between other components is merely described as an example, and is not limited thereto. The bus may be classified into an address bus, a data bus, a control bus, or the like. For ease of representation, only one bold line is used for representation in FIG. 8, but this does not mean that there is only one bus or only one type of bus.

When the communication apparatus 800 is specifically an apparatus used in a device (for example, a terminal device, an access network device, a core network device, or a server), for example, when the communication apparatus 800 is specifically a chip or a chip system, the communication interface 820 may output or receive a baseband signal. When the communication apparatus 800 is specifically a device (a terminal device, an access network device, a core network device, or a server), the communication interface 820 may output or receive a radio frequency signal. In embodiments of this application, the processor may be a general-purpose processor, a digital signal processor, an application-specific integrated circuit, a field programmable gate array or another programmable logic device, a discrete gate or transistor logic device, or a discrete hardware component, and may implement or perform the methods, steps, and logic block diagrams disclosed in embodiments of this application. The general-purpose processor may be a microprocessor, any conventional processor, or the like. The steps in the methods disclosed with reference to embodiments of this application may be directly performed and completed by a hardware processor, or may be performed and completed by a combination of hardware and software modules in the processor.

It should be noted that the communication interface 820 may be configured to perform a function of the interface unit 701, and the processor 810 may be configured to perform a function of the processing unit 702. Details are not described herein again.

When the communication apparatus is a chip used in a terminal device, the chip implements a function of the terminal device in the foregoing method embodiments; and the chip receives information from another device, or the chip sends information to another device.

When the communication apparatus is a chip used in an access network device, the chip implements a function of the access network device in the foregoing method embodiments. The chip receives information from another device, or the chip sends information to another device.

When the communication apparatus is a chip used in a core network device, the chip implements a function of the core network device in the foregoing method embodiments. The chip receives information from another device, or the chip sends information to another device.

When the communication apparatus is a chip used in a server, the chip implements a function of the server in the foregoing method embodiments. The chip receives information from another device, or the chip sends information to another device.

It may be understood that the processor in embodiments of this application may be a central processing unit (central processing unit, CPU), or may be another general-purpose processor, a digital signal processor (digital signal processor, DSP), an application-specific integrated circuit (application specific integrated circuit, ASIC), a field programmable gate array (field programmable gate array, FPGA) or another programmable logic device, a transistor logic device, a hardware component, or any combination thereof. The general-purpose processor may be a microprocessor or any conventional processor.

The method steps in embodiments of this application may be implemented in a hardware manner, or may be implemented in a manner of executing software instructions by the processor. The software instructions may include a corresponding software module. The software module may be stored in a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk, a removable hard disk, a CD-ROM, or any other form of storage medium well-known in the art. For example, a storage medium is coupled to the processor, so that the processor can read information from the storage medium and write information into the storage medium. Certainly, the storage medium may further be a component of the processor. The processor and the storage medium may be located in the ASIC. In addition, the ASIC may be located in the access network device or terminal. Certainly, the processor and the storage medium may alternatively exist in the terminal or access network device as discrete components.

All or a part of the foregoing embodiments may be implemented by software, hardware, firmware, or any combination thereof. When the software is used for implementation, all or a part of embodiments may be implemented in a form of a computer program product. The computer program product includes one or more computer programs or instructions. When the computer programs or instructions are loaded and executed on a computer, all or a part of procedures or functions in embodiments of this application are performed. The computer may be a general-purpose computer, a dedicated computer, a computer network, or another programmable apparatus. The computer programs or the instructions may be stored in a computer-readable storage medium, or may be transmitted through the computer-readable storage medium. The computer-readable storage medium may be any usable medium accessible by the computer, or a data storage device, for example, a server, integrating one or more usable media. The usable medium may be a magnetic medium, for example, a floppy disk, a hard disk drive, or a magnetic tape; or may be an optical medium, for example, a DVD; or may be a semiconductor medium, for example, a solid-state drive (solid-state drive, SSD).

In embodiments of this application, unless otherwise stated or there is a logic conflict, terms and/or descriptions in different embodiments are consistent and may be mutually referenced, and technical features in different embodiments may be combined based on an internal logic relationship thereof, to form a new embodiment.

It may be understood that various numbers in embodiments of this application are merely used for differentiation for ease of description, and are not used to limit the scope of embodiments of this application. The sequence numbers of the foregoing processes do not mean an execution sequence, and the execution sequence of the processes should be determined based on functions and internal logic of the processes.

An embodiment of this application further provides a computer-readable storage medium. The computer-readable storage medium stores computer-executable instructions. When the computer-executable instructions are executed, the method performed by the terminal device, or the access network device, or the core network device, or the server in the foregoing method embodiments is implemented.

An embodiment of this application further provides a computer program product. The computer program product includes a computer program. When the computer program is executed, the method performed by the terminal device, or the access network device, or the core network device, or the server in the foregoing method embodiments is implemented.

It should be noted that, for brief description, the foregoing method embodiments are represented as a series of actions. However, a person skilled in the art should appreciate that this application is not limited to the described order of the actions because some steps may be performed in another order or simultaneously according to this application. It should be further appreciated by a person skilled in the art that embodiments described in this specification are all example embodiments, and the related actions and modules are not necessarily required by this application.

Descriptions of embodiments provided in this application may be mutually referenced. The descriptions of embodiments have respective focuses. For a part that is not described in detail in an embodiment, refer to related descriptions in other embodiments. For ease of description and brevity, for functions of the apparatuses and devices provided in embodiments of this application and performed steps, refer to the related descriptions in the method embodiments of this application. The method embodiments and the apparatus embodiments may also be mutually referenced, combined, or cited.

Finally, it should be noted that the foregoing embodiments are merely intended for describing the technical solutions of this application rather than limiting this application. Although this application is described in detail with reference to the foregoing embodiments, a person of ordinary skill in the art should understand that modifications may still be made to the technical solutions described in the foregoing embodiments or equivalent replacements may still be made to some or all technical features thereof, without departing from the scope of the technical solutions of embodiments of this application.

## Claims

1. A communication method, wherein the method comprises:
receiving a first uplink data packet, wherein the first uplink data packet comprises a first perception layer header, the first perception layer header carries first control information and/or a first transmission parameter, the first control information is used to request a second transmission parameter, the first transmission parameter is a parameter provided by a first application layer for a first data link layer, the second transmission parameter is a parameter provided by a second data link layer for the first application layer, and the first uplink data packet is a data packet corresponding to a first service flow.

2. The method according to claim 1, wherein the first perception layer header carries the first control information, the first control information comprises first information, and the first information is used to request a first parameter; and the method further comprises:
sending the first parameter to the first application layer based on the first information.

3. The method according to claim 1 or 2, wherein the first perception layer header carries the first control information, the first control information comprises second information, and the second information is used to request an access network device to provide a second parameter; and the method further comprises:
sending the second information to the access network device.

4. The method according to claim 3, wherein sending the second information to the access network device comprises:
carrying the second information in a first data link layer header, and sending the first data link layer header to the access network device.

5. The method according to claim 1 or 3, wherein the first perception layer header carries the first transmission parameter, and the first transmission parameter comprises a third parameter; and the method further comprises:
adjusting, based on the third parameter, a transmission policy of an uplink data packet corresponding to the first service flow.

6. The method according to claim 5, wherein before receiving the first uplink data packet, the method further comprises:
comprising second control information in a second perception layer header, and sending the second perception layer header to the first application layer, wherein the second control information is used to request the third parameter.

7. The method according to claim 1 or 3, wherein the first perception layer header carries the first transmission parameter, and the first transmission parameter comprises a fourth parameter; and the method further comprises:
carrying the fourth parameter in a second data link layer header, and sending the second data link layer header to the access network device.

8. The method according to claim 7, wherein before receiving the first uplink data packet, the method further comprises:
receiving third control information from the access network device, wherein the third control information is used to request the fourth parameter; and
sending the third control information to the first application layer.

9. The method according to claim 8, wherein receiving the third control information from the access network device comprises:
receiving a fourth data link layer header from the access network device, wherein the fourth data link layer header carries the third control information.

10. The method according to claim 9, wherein sending the third control information to the first application layer comprises:
carrying the third control information in a third perception layer header, and sending the third perception layer header to the first application layer.

11. The method according to any one of claims 1 to 10, wherein the first transmission parameter comprises at least one of the following:
a data delay parameter, wherein the data delay parameter indicates a packet delay budget of a first data packet, and the first data packet is a data packet corresponding to the first service flow; a data sequence parameter, wherein the data sequence parameter indicates a sequence identifier corresponding to the first data packet;
a data invalidation parameter, wherein the data invalidation parameter indicates a sequence identifier of an invalid data packet; and
a data importance level parameter, wherein the data importance level parameter indicates an importance level of the first data packet.

12. The method according to any one of claims 1 to 11, wherein the second transmission parameter comprises at least one of the following:
a reference transmission rate, wherein the reference transmission rate indicates a maximum transmission rate that can be provided by the access network device for the first service flow; a predicted transmission rate, wherein the predicted transmission rate indicates a maximum transmission rate that can be provided by the access network device for the first service flow at a prediction moment; and
a data timing parameter, wherein the data timing parameter indicates time at which the access network device expects an application layer of a terminal device to send a data packet.

13. A communication method, wherein the method comprises:
sending a first uplink data packet, wherein the first uplink data packet comprises a first perception layer header, the first perception layer header carries first control information and/or a first transmission parameter, the first control information is used to request a second transmission parameter, the first transmission parameter is a parameter provided by a first application layer for a first data link layer, the second transmission parameter is a parameter provided by a second data link layer for the first application layer, and the first uplink data packet is a data packet corresponding to a first service flow.

14. The method according to claim 13, wherein the first perception layer header carries the first control information; and the method further comprises:
receiving the second transmission parameter; and
adjusting, based on the second transmission parameter, a transmission policy of an uplink data packet corresponding to the first service flow.

15. The method according to claim 13, wherein the first perception layer header carries the first transmission parameter; and before sending the first uplink data packet, the method further comprises: receiving fourth control information, wherein the fourth control information is used to request the first transmission parameter; and
generating the first transmission parameter based on the fourth control information.

16. A communication method, wherein the method comprises:
receiving a second uplink data packet from a terminal device, wherein the second uplink data packet comprises a third data link layer header, the third data link layer header carries second information and/or a fourth parameter, the second information is used to request a second parameter, the second parameter is a parameter provided by a data link layer of an access network device for a first application layer, the fourth parameter is a parameter provided by the first application layer for the data link layer of the access network device, and the second uplink data packet is a data packet corresponding to a first service flow.

17. The method according to claim 16, wherein the third data link layer header carries the fourth parameter; and the method further comprises:
adjusting, based on the fourth parameter, a transmission policy of an uplink data packet corresponding to the first service flow.

18. The method according to claim 17, wherein before receiving the second uplink data packet from the terminal device, the method further comprises:
sending third control information to the terminal device, wherein the third control information is used to request the fourth parameter.

19. The method according to claim 18, wherein sending the third control information to the terminal device comprises:
carrying the third control information in a first GTP-U header, and sending the first GTP-U header to a core network device;
receiving a third perception layer header from the core network device, wherein the third perception layer header carries the third control information; and
sending the third perception layer header to the terminal device.

20. The method according to claim 18, wherein sending the third control information to the terminal device comprises:
carrying the third control information in a fourth data link layer header, and sending the fourth data link layer header to the terminal device.

21. The method according to claim 16 or 17, wherein the third data link layer header carries the second information; and the method further comprises:
sending the second parameter to the terminal device based on the second information.

22. The method according to claim 21, wherein sending the second parameter to the terminal device comprises:
carrying the second parameter in a second GTP-U header, and sending the second GTP-U header to the core network device;
receiving a fourth perception layer header from the core network device, wherein the fourth perception layer header carries the second parameter; and
sending the fourth perception layer header to the terminal device.

23. The method according to claim 21, wherein sending the second parameter to the terminal device
comprises:
carrying the second parameter in a fifth data link layer header, and sending the fifth data link layer header to the terminal device.

24. The method according to claim 16, wherein the method further comprises:
receiving a first downlink data packet from a core network device, wherein the first downlink data packet comprises fifth control information and/or a third transmission parameter, the fifth control information is used to request a fourth transmission parameter, the third transmission parameter is a parameter provided by a second application layer for the data link layer of the access network device, the fourth transmission parameter is a parameter provided by the data link layer of the access network device for the second application layer, and the first downlink data packet is a data packet corresponding to the first service flow.

25. The method according to claim 24, wherein the first downlink data packet comprises the fifth control information; and the method further comprises:
sending the fourth transmission parameter to the core network device based on the fifth control information.

26. The method according to claim 24 or 25, wherein the first downlink data packet comprises the third transmission parameter; and the method further comprises:
adjusting, based on the third transmission parameter, a transmission policy of a downlink data packet corresponding to the first service flow.

27. The method according to claim 26, wherein before receiving the first downlink data packet from the core network device, the method further comprises:
sending sixth control information to the core network device, wherein the sixth control information is used to request the third transmission parameter.

28. The method according to claim 27, wherein sending the sixth control information to the core network device comprises:
carrying the sixth control information in a third GTP-U header, and sending the third GTP-U header to the core network device.

29. A communication method, wherein the method comprises:
receiving a third uplink data packet from an access network device, wherein the third uplink data packet comprises seventh control information and/or a fifth transmission parameter, the seventh control information is used to request a sixth transmission parameter, the sixth transmission parameter is a parameter provided by a third application layer for a third data link layer, the fifth transmission parameter is a parameter provided by a fourth data link layer for a fourth application layer, and the third uplink data packet is a data packet corresponding to a first service flow.

30. The method according to claim 29, wherein the third uplink data packet comprises the seventh control information, the seventh control information comprises third information, and the third information is used to request a terminal device to provide a fifth parameter; and the method further comprises: carrying the third information in a fifth perception layer header, and sending the fifth perception layer header to the access network device.

31. The method according to claim 29 or 30, wherein the third uplink data packet comprises the seventh control information, the seventh control information comprises fourth information, and the fourth information is used to request a server to provide a sixth parameter; and the method further comprises: carrying the fourth information in a sixth perception layer header, and sending the sixth perception layer header to the server.

32. The method according to claim 31, wherein the method further comprises:
receiving a seventh perception layer header from the server, wherein the seventh perception layer header carries the sixth parameter; and
carrying the sixth parameter in a fourth GTP-U header, and sending the fourth GTP-U header to the access network device.

33. The method according to any one of claims 29 to 32, wherein the third uplink data packet comprises the fifth transmission parameter, and the fifth transmission parameter comprises a seventh parameter; and the method further comprises:
carrying the seventh parameter in an eighth perception layer header, and sending the eighth perception layer header to the access network device.

34. The method according to any one of claims 29 to 33, wherein the third uplink data packet comprises the fifth transmission parameter, and the fifth transmission parameter comprises an eighth parameter; and the method further comprises:
carrying the eighth parameter in the eighth perception layer header, and sending the eighth perception layer header to the server.

35. The method according to claim 34, wherein before receiving the third uplink data packet from the access network device, the method further comprises:
receiving eighth control information from the server, wherein the eighth control information is used to request the eighth parameter; and
sending the eighth control information to the access network device.

36. A communication method, wherein the method comprises:
sending, by a terminal device, a first uplink data packet to an access network device, wherein the first uplink data packet comprises a data link layer header, the data link layer header carries first control information, the first control information is used to request the access network device to provide a first transmission parameter, the first transmission parameter is a parameter provided by a data link layer of the access network device for an application layer of the terminal device, and the first uplink data packet is a data packet corresponding to a first service flow;
receiving, by the access network device, the first uplink data packet, and sending a second uplink data packet to a core network device based on the first control information, wherein the second uplink data packet comprises the first transmission parameter, and the second uplink data packet is a data packet corresponding to the first service flow;
receiving, by the core network device, the second uplink data packet, and sending a first downlink data packet to the access network device based on the first transmission parameter, wherein the first downlink data packet comprises a perception layer header, the perception layer header carries the first transmission parameter, and the first downlink data packet is a data packet corresponding to the first service flow;
receiving, by the core network device, the first downlink data packet, and sending the first downlink data packet to the terminal device; and
receiving, by the terminal device, the first downlink data packet, and adjusting, based on the first transmission parameter, a transmission policy of an uplink data packet corresponding to the first service flow.

37. A communication apparatus, comprising a module configured to perform the method according to any one of claims 1 to 12, or a module configured to perform the method according to any one of claims 13 to 15, or a module configured to perform the method according to any one of claims 16 to 28, or a module configured to perform the method according to any one of claims 29 to 35.

38. A communication apparatus, comprising a processor, wherein the processor is configured to implement, through a logic circuit and/or by executing a computer program or instructions, the method according to any one of claims 1 to 12, or the method according to any one of claims 13 to 15, or the method according to any one of claims 16 to 28, or the method according to any one of claims 29 to 35.

39. The communication apparatus according to claim 38, further comprising a memory, configured to store the computer program or the instructions.

40. A communication apparatus, comprising a processor and an interface circuit, wherein the interface circuit is configured to: receive a signal from a communication apparatus other than the communication apparatus and transmit the signal to the processor; or send a signal from the processor to a communication apparatus other than the communication apparatus; and the processor is configured to implement, through a logic circuit or by executing code instructions, the method according to any one of claims 1 to 12, or the method according to any one of claims 13 to 15, or the method according to any one of claims 16 to 28, or the method according to any one of claims 29 to 35.

41. A computer-readable storage medium, wherein the storage medium stores a computer program or instructions, and when the computer program or the instructions are executed by a communication apparatus, the method according to any one of claims 1 to 12, or the method according to any one of claims 13 to 15, or the method according to any one of claims 16 to 28, or the method according to any one of claims 29 to 35 is implemented.

42. A computer program product, comprising computer program code, wherein when the computer program code is run on a communication apparatus, the communication apparatus implements the method according to any one of claims 1 to 12, or the method according to any one of claims 13 to 15, or the method according to any one of claims 16 to 28, or the method according to any one of claims 29 to 35.
